(19) Europäisches Patentamt
European Patent Office
Office européen des brevets

(11) **EP 4 478 619 A1**

(12) **EUROPEAN PATENT APPLICATION**
published in accordance with Art. 153(4) EPC

(43) Date of publication:
**18.12.2024   Bulletin 2024/51**

(51) International Patent Classification (IPC):
**H04B 7/0417** (2017.01)

(21) Application number: **23769614.1**

(52) Cooperative Patent Classification (CPC):
**H04B 7/0456; H04B 7/0417; H04B 7/06;
H04B 7/0626; H04L 5/00**

(22) Date of filing: **07.03.2023**

(86) International application number:
**PCT/CN2023/080116**

(87) International publication number:
**WO 2023/174108 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022   CN 202210248158**

(71) Applicant: **Huawei Technologies Co., Ltd.
Shenzhen, Guangdong 518129 (CN)**

(72) Inventors:
• **HANG, Haicun
  Shenzhen, Guangdong 518129 (CN)**
• **CHEN, Jiaxuan
  Shenzhen, Guangdong 518129 (CN)**
• **LIANG, Jing
  Shenzhen, Guangdong 518129 (CN)**
• **WU, Yiqun
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) The present disclosure provides a communication method and apparatus, to reduce channel state information feedback overheads. The method includes: determining first channel information, where the first channel information includes information in M1 dimensions, information in an $i^{th}$ dimension in the M1 dimensions includes $N_i$ pieces of information, M1 is a positive integer greater than 1, $i$ is a positive integer ranging from 1 to M1, and $N_i$ is a positive integer greater than 1; determining channel state indication information based on second channel information, where the second channel information indicates partial information of $N_m$ pieces of information in an $m^{th}$ dimension in the M1 dimensions, and $m$ is a positive integer from 1 to M1; and sending first indication information and the channel state indication information, where the first indication information indicates a location of the second channel information in the first channel information.

```
┌─────────────────┐                    ┌─────────────────┐
│ Terminal device │                    │ Access network  │
│                 │                    │ device          │
└─────────────────┘                    └─────────────────┘
         │                                      │
┌────────────────────────┐                      │
│ S501: Determine first  │                      │
│ channel information     │                      │
└────────────────────────┘                      │
┌──────────────────────────────────┐            │
│ S502: Determine channel state     │            │
│ indication information based on    │            │
│ partial information (second        │            │
│ channel information) of the first  │            │
│ channel information                │            │
└──────────────────────────────────┘            │
         │  S503: First indication information    │
         │  and channel state indication info     │
         │───────────────────────────────────────▶│
         │                          ┌─────────────────────────────┐
         │                          │ S504: Restore the first      │
         │                          │ channel information based on  │
         │                          │ the first indication info     │
         │                          │ and the channel state         │
         │                          │ indication information        │
         │                          └─────────────────────────────┘
```

FIG. 5

## Description

## CROSS-REFERENCE TO RELATED APPLICATIONS

This application claims priority to Chinese Patent Application No. 202210248158.5, filed with the China National Intellectual Property Administration on March 14, 2022 and entitled "COMMUNICATION METHOD AND APPARATUS", which is incorporated herein by reference in its entirety.

## TECHNICAL FIELD

The present disclosure relates to the field of communication technologies, and in particular, to a communication method and apparatus.

## BACKGROUND

A 5th generation (5th generation, 5G) mobile communication system has higher requirements on a system capacity, spectral efficiency, and the like. In the 5G communication system, application of a massive multiple-input multiple-output (massive multiple-input multiple-output, massive-MIMO) technology plays an important role in improving the spectral efficiency of the system. Based on the massive-MIMO technology, a base station can provide high-quality services for more user equipments (user equipment, UE). A key step is that the base station performs precoding on downlink data of a plurality of UEs. Through the precoding, spatial multiplexing (spatial multiplexing) can be implemented, interference between UEs can be reduced, and a signal to interference plus noise ratio (signal to interference plus noise ratio, SINR) at a receiving end can be increased. Therefore, a system throughput rate is increased. To more accurately perform precoding on the downlink data of the UE, the base station may obtain channel state information (channel state information, CSI) of a downlink channel, recover the downlink channel based on the CSI, and determine a precoding matrix by using the recovered downlink channel, to perform precoding. How the base station effectively obtains the CSI of the downlink channel is an important research topic.

## SUMMARY

The present disclosure provides a communication method and apparatus, to reduce CSI feedback overheads and improve communication performance.

According to a first aspect, the present disclosure provides a communication method, including: determining first channel information, where the first channel information includes information in M1 dimensions, information in an $i^{th}$ dimension in the M1 dimensions includes $N_i$ pieces of information, M1 is a positive integer greater than 1, $i$ is a positive integer ranging from 1 to M1, and $N_i$ is a positive integer greater than 1; determining channel state indication information based on second channel information, where the second channel information indicates partial information of $N_m$ pieces of information in an $m^{th}$ dimension in the M1 dimensions, and $m$ is a positive integer from 1 to M1; and sending first indication information and the channel state indication information, where the first indication information indicates a location of the second channel information in the first channel information.

According to such a design, partial information of the channel information is compressed and fed back, so that CSI feedback overheads can be reduced.

In a possible design, the partial information of the $N_m$ pieces of information in the $m^{th}$ dimension includes K pieces of information, energy of any one of the K pieces of information is greater than or equal to energy of any one of the $N_m$ pieces of information in the $m^{th}$ dimension other than the K pieces of information, and K is a positive integer greater than 1.

According to such a design, partial information with high energy in the channel information is selected for compression and feedback, so that CSI feedback precision can be improved, and performance of a communication system can be improved.

In a possible design, the partial information of the $N_m$ pieces of information in the $m^{th}$ dimension includes K pieces of information, energy of a $k^{th}$ piece of information in the K pieces of information is greater than energy of a $(k+1)^{th}$ piece of information, K is a positive integer greater than 1, and k is a positive integer ranging from 1 to K-1. According to such a design, sorting is performed based on energy levels. In this way, a quantity of compressed bits is combined with energy, to ensure that information with high energy is compressed by using a large quantity of bits, thereby ensuring accuracy of channel compression.

In a possible design, the partial information of the $N_m$ pieces of information in the $m^{th}$ dimension includes K pieces of information, a sequence of indexes of the $k^{th}$ piece of information and a $(k+1)^{th}$ piece of information in the K pieces of information is the same as a sequence of indexes of first information and second information in the first channel information, the $k^{th}$ piece of information corresponds to the first information, the $(k+1)^{th}$ piece of information corresponds to the second information, K is a positive integer greater than 1, and k is a positive integer ranging from 1 to K-1. According to such a design, a relative relationship between original information in the first channel information is retained or extracted in a process of compressing the channel information, thereby improving performance of the communication system.

In a possible design, an information type of the $m^{th}$ dimension includes delay domain information or angle domain information.

In a possible design, the information type corresponding to the $m^{th}$ dimension is the delay domain information, the partial information of the $N_m$ pieces of information in the $m^{th}$ dimension includes a $t^{th}$ piece of information in the $N_m$ pieces of information, the first indication information indicates a location, in the first channel information, of information other than the $t^{th}$ piece of information in the second channel information, and t is a pre-configured value. According to such a design, signaling overheads of the first indication information can be reduced. For example, a location of the $t^{th}$ piece of information does not need to be indicated.

In a possible design, the partial information of the $N_m$ pieces of information in the $m^{th}$ dimension includes K pieces of information, and the method further includes: obtaining second indication information, where the second indication information indicates a value of K and/or a quantity of bits that are in the channel state indication information and that correspond to each of the K pieces of information, and K is a positive integer greater than 1. According to such a design, partial information to be compressed in the channel information can be flexibly indicated, so that different communication environments can be adapted.

In a possible design, the channel state indication information indicates encoded information of the second channel information.

In a possible design, the determining first channel information includes: obtaining third channel information, where the third channel information includes information in M2 dimensions, and M2 is equal to M1; and performing conversion processing on the third channel information in at least one dimension to determine the first channel information, where an information type of at least one dimension in the M2 dimensions and an information type of at least one dimension in the M1 dimensions are different. According to such a design, the channel information can be converted in different dimensions, thereby enhancing sparse characteristics of the channel information in different information fields, reducing CSI feedback overheads, and improving performance of the communication system.

In a possible design, the determining first channel information includes: obtaining third channel information, where the third channel information includes information in M2 dimensions, and M2 is equal to M1; and performing conversion processing on the third channel information in at least one dimension to determine fourth channel information, where the first channel information is cyclic shift information of the fourth channel information, and an information type of at least one dimension in the M2 dimensions and an information type of at least one dimension in the M1 dimensions are different. According to such a design, a location of the second channel information can be flexibly indicated, thereby reducing signaling overheads while ensuring communication performance.

In a possible design, information types of the M2 dimensions include frequency domain information, and information types of the M1 dimensions include delay domain information corresponding to the frequency domain information; and/or the information types of the M2 dimensions include space domain information, and the information types of the M1 dimensions include angle domain information corresponding to the space domain information.

According to a second aspect, the present disclosure provides a communication method, including: obtaining first indication information and channel state indication information, where the first indication information indicates a location of second channel information in first channel information, the channel state indication information is determined based on the second channel information (alternatively, it is described as follows: the channel state indication information is channel state indication information corresponding to the second channel information), the first channel information includes information in M1 dimensions, information in an $i^{th}$ dimension in the M1 dimensions includes $N_i$ pieces of information, the second channel information indicates partial information of $N_m$ pieces of information in an $m^{th}$ dimension in the M1 dimensions, M1 is a positive integer greater than 1, $i$ is a positive integer ranging from 1 to M1, $N_i$ is a positive integer greater than 1, and $m$ is a positive integer from 1 to M1; and restoring the first channel information based on the first indication information and the channel state indication information.

For a definition of the partial information of the $N_m$ pieces of information in the $m^{th}$ dimension, refer to the possible designs in the first aspect for understanding. Details are not described again in the present disclosure.

For definitions of an information type of the $m^{th}$ dimension and the first indication information, refer to the possible designs in the first aspect for understanding. Details are not described again in the present disclosure.

For a definition of the channel state indication information, refer to the possible designs in the first aspect for understanding. Details are not described again in the present disclosure.

In a possible design, the partial information of the $N_m$ pieces of information in the $m^{th}$ dimension includes K pieces of information, and the method further includes: sending second indication information, where the second indication information indicates a value of K and/or a quantity of bits that are in the channel state indication information and that correspond to each of the K pieces of information, and K is a positive integer greater than 1.

According to a third aspect, the present disclosure provides a communication apparatus. The communication apparatus may be a terminal device, or may be an apparatus, a module, a chip, or the like in the terminal device, or may be an apparatus that can be used together with the terminal device. In a design, the communication apparatus may include modules that are in one-to-one correspondence with the method/operation/step/action described in the first aspect. The modules may be implemented by a hardware circuit, software, or a combination of the hardware circuit and software. In a design, the communication apparatus may include a processing module and a communication module.

An example is as follows.

The processing module is configured to determine first channel information, where the first channel information includes information in M1 dimensions, information in an $i^{th}$ dimension in the M1 dimensions includes $N_i$ pieces of information, M1 is a positive integer greater than 1, $i$ is a positive integer ranging from 1 to M1, and $N_i$ is a positive integer greater than 1; and determine channel state indication information based on second channel information, where the second channel information indicates partial information of $N_m$ pieces of information in an $m^{th}$ dimension in the M1 dimensions, and $m$ is a positive integer from 1 to M1. The communication module is configured to send first indication information and the channel state indication information, where the first indication information indicates a location of the second channel information in the first channel information.

For a definition of the partial information of the $N_m$ pieces of information in the $m^{th}$ dimension, refer to the possible designs in the first aspect for understanding. Details are not described again in the present disclosure.

For definitions of an information type of the $m^{th}$ dimension and the first indication information, refer to the possible designs in the first aspect for understanding. Details are not described again in the present disclosure.

For a definition of the channel state indication information, refer to the possible designs in the first aspect for understanding. Details are not described again in the present disclosure.

In a possible design, the communication module is further configured to obtain third channel information, where the third channel information includes information in M2 dimensions, and M2 is equal to M1; and the processing module is further configured to perform conversion processing on the third channel information in at least one dimension to determine the first channel information, where an information type of at least one dimension in the M2 dimensions and an information type of at least one dimension in the M1 dimensions are different.

In a possible design, the communication module is further configured to obtain third channel information, where the third channel information includes information in M2 dimensions,

and M2 is equal to M1; and the processing module is further configured to perform conversion processing on the third channel information in at least one dimension to determine fourth channel information, where the first channel information is cyclic shift information of the fourth channel information, and an information type of at least one dimension in the M2 dimensions and an information type of at least one dimension in the M1 dimensions are different.

In a possible design, information types of the M2 dimensions include frequency domain information, and information types of the M1 dimensions include delay domain information corresponding to the frequency domain information; and/or the information types of the M2 dimensions include space domain information, and the information types of the M1 dimensions include angle domain information corresponding to the space domain information.

According to a fourth aspect, the present disclosure provides a communication apparatus. The communication apparatus may be an access network device, or may be an apparatus, a module, a chip, or the like in the access network device, or may be an apparatus that can be used together with the access network device. In a design, the communication apparatus may include modules that are in one-to-one correspondence with the method/operation/step/action described in the second aspect. The modules may be implemented by a hardware circuit, software, or a combination of the hardware circuit and software. In a design, the communication apparatus may include a processing module and a communication module.

An example is as follows.

The communication module is configured to obtain first indication information and channel state indication information, where the first indication information indicates a location of second channel information in first channel information, the channel state indication information is determined based on the second channel information, the first channel information includes information in M1 dimensions, information in an $i^{th}$ dimension in the M1 dimensions includes $N_i$ pieces of information, the second channel information indicates partial information of $N_m$ pieces of information in an $m^{th}$ dimension in the M1 dimensions, M1 is a positive integer greater than 1, $i$ is a positive integer ranging from 1 to M1, $N_i$ is a positive integer greater than 1, and $m$ is a positive integer from 1 to M1; and the processing module is configured to restore the first channel information based on the first indication information and the channel state indication information.

For a definition of the partial information of the $N_m$ pieces of information in the $m^{th}$ dimension, refer to the possible designs in the first aspect for understanding. Details are not described again in the present disclosure.

For definitions of an information type of the $m^{th}$ dimension and the first indication information, refer to the possible designs in the first aspect for understanding. Details are not described again in the present disclosure.

In a possible design, the partial information of the $N_m$ pieces of information in the $m^{th}$ dimension includes K pieces of information, and the communication module is further configured to send second indication information, where the second indication information indicates a value of K and/or a quantity of bits that are in the channel state indication information and that correspond to each of the K pieces of information, and K is a positive integer greater than 1.

According to a fifth aspect, the present disclosure provides a communication apparatus. The communication apparatus includes a processor, configured to implement the method described in the first aspect. The processor is coupled to a memory. The memory is configured to store instructions and data. When executing the instructions stored in the memory, the processor can implement the method described in the first aspect. Optionally, the communication apparatus may further include a memory. The communication apparatus may further include a communication interface. The communication interface is used by the apparatus to communicate with another device. For example, the communication interface may be a transceiver, a circuit, a bus, a module, a pin, or a communication interface of another type.

In a possible design, the communication apparatus includes:

a memory, configured to store program instructions; and
a processor, configured to determine first channel information, where the first channel information includes information in M1 dimensions, information in an $i^{th}$ dimension in the M1 dimensions includes $N_i$ pieces of information, M1 is a positive integer greater than 1, $i$ is a positive integer ranging from 1 to M1, and $N_i$ is a positive integer greater than 1; determine channel state indication information based on second channel information, where the second channel information indicates partial information of $N_m$ pieces of information in an $m^{th}$ dimension in the M1 dimensions, and $m$ is a positive integer from 1 to M1; and send first indication information and the channel state indication information through the communication interface, where the first indication information indicates a location of the second channel information in the first channel information.

According to a sixth aspect, the present disclosure provides a communication apparatus. The communication apparatus includes a processor, configured to implement the method described in the second aspect. The processor is coupled to a memory. The memory is configured to store instructions and data. When executing the instructions stored in the memory, the processor can implement the method described in the second aspect. Optionally, the communication apparatus may further include a memory. The communication apparatus may further include a communication interface. The communication interface is used by the apparatus to communicate with another device. For example, the communication interface may be a transceiver, a circuit, a bus, a module, a pin, or a communication interface of another type.

In a possible design, the communication apparatus includes:

a memory, configured to store program instructions; and
a processor, configured to obtain first indication information and channel state indication information through the communication interface, where the first indication information indicates a location of second channel information in first channel information, the channel state indication information is determined based on the second channel information, the first channel information includes information in M1 dimensions, information in an $i^{th}$ dimension in the M1 dimensions includes $N_i$ pieces of information, the second channel information indicates partial information of $N_m$ pieces of information in an $m^{th}$ dimension in the M1 dimensions, M1 is a positive integer greater than 1, $i$ is a positive integer ranging from 1 to M1, $N_i$ is a positive integer greater than 1, and $m$ is a positive integer from 1 to M1; and restore the first channel information based on the first indication information and the channel state indication information.

According to a seventh aspect, the present disclosure provides a communication system, including the communication apparatus described in the third aspect or the fifth aspect and the communication apparatus described in the fourth aspect or the sixth aspect.

According to an eighth aspect, the present disclosure further provides a computer program. When the computer program is run on a computer, the computer is enabled to perform the method provided in either of the first aspect or the second aspect.

According to a ninth aspect, the present disclosure further provides a computer program product, including instructions. When the instructions are run on a computer, the computer is enabled to perform the method provided in either of the first aspect or the second aspect.

According to a tenth aspect, the present disclosure further provides a computer-readable storage medium. The computer-readable storage medium stores a computer program or instructions, and when the computer program or the instructions are run on a computer, the computer is enabled to perform the method provided in either of the first aspect or the second aspect.

According to an eleventh aspect, the present disclosure further provides a chip. The chip is configured to read a computer program stored in a memory, to perform the method provided in either of the first aspect or the second aspect.

According to a twelfth aspect, the present disclosure further provides a chip system. The chip system includes a processor, configured to support a computer apparatus in implementing the method provided in either of the first aspect or the second aspect. In a possible design, the chip system further includes a memory, and the memory is configured to store a program and data that are necessary for the computer apparatus. The chip system may include a chip, or may include a chip and another discrete component.

## BRIEF DESCRIPTION OF DRAWINGS

FIG. 1 is a diagram of a structure of a communication system;
FIG. 2 is a diagram of a structure of another communication system;
FIG. 3A is a diagram of a neuron structure;
FIG. 3B is a diagram of a layer relationship of a neural network;
FIG. 3C is a diagram of an AI application framework according to the present disclosure;
FIG. 4A to FIG. 4D are diagrams of several network architectures;
FIG. 5 is a schematic flowchart of a communication method according to the present disclosure;
FIG. 6A is a diagram of an arrangement of information according to the present disclosure;
FIG. 6B is a diagram of another arrangement of information according to the present disclosure;
FIG. 7A is a diagram of a type of encoding and decoding interaction according to the present disclosure;
FIG. 7B is a diagram of another type of encoding and decoding interaction according to the present disclosure;
FIG. 8 is a diagram of a structure of a communication apparatus according to the present disclosure; and
FIG. 9 is a diagram of a structure of a communication apparatus according to the present disclosure.

## DESCRIPTION OF EMBODIMENTS

To make the objectives, technical solutions, and advantages of the present disclosure clearer, the following further describes the present disclosure in detail with reference to the accompanying drawings.

The at least one (item) described in the present disclosure below indicates one (item) or more (items). The plurality of (items) indicates two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first and second may be used in the present disclosure to describe objects, these objects are not limited by these terms. These terms are merely used to distinguish the objects from each other.

Terms "including", "having", and any other variant thereof mentioned in descriptions of the present disclosure below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in the present disclosure, the term such as "example" or "for example" represents giving an example, an illustration, or a description. Any method or design scheme described in the present disclosure as "example" or "for example" should not be construed as being more preferred or advantageous over another method or design scheme. Exactly, use of the term "example", "for example", or the like is intended to present a related concept in a specific manner.

The technologies provided in the present disclosure may be applied to various communication systems. For example, the communication system may be a 3rd generation (3rd generation, 3G) communication system (for example, a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a converged system of a plurality of systems, or a future communication system, for example, a 6G communication system. The 5G communication system may also be referred to as a new radio (new radio, NR) system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In the present disclosure, the network element is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may also send signals to each other. In other words, both a signal sending network element and a signal receiving network element may be terminal devices.

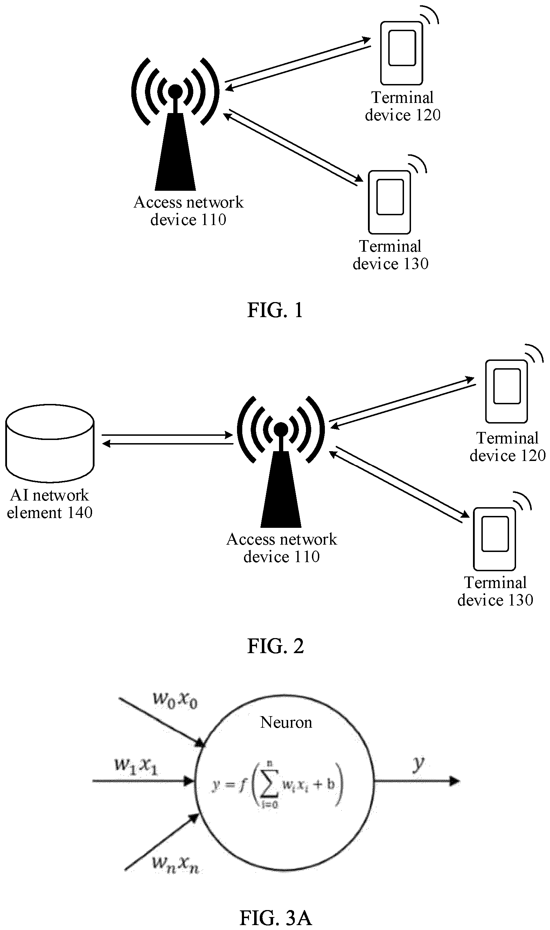

FIG. 1 shows a communication system 100. For example, the communication system 100 includes an access network device 110 and two terminal devices, namely, a terminal device 120 and a terminal device 130. At least one of the terminal device 120 and the terminal device 130 may send uplink data to the access network device 110, and the access network device 110 may receive the uplink data. The access network device may send downlink data to at least one of the terminal device 120 and the terminal device 130.

The following describes in detail the terminal devices and the access network device in FIG. 1.

(1) Access network device

An access network device may be a base station (base station, BS). The access network device may also be referred to as a network device, an access node (access node, AN), or a radio access node (radio access node, RAN). The access network device may be connected to a core network (for example, an LTE core network or a 5G core network), and the access network device may provide a radio access service for the terminal devices. The access network device includes, for example, but is not limited to, at least one of the following: a next-generation NodeB (generation NodeB, gNB) in 5G, an access network device in an open radio access network (open radio access network, O-RAN) or a module included in the access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission and reception point (transmission and reception point, TRP), a transmission point (transmission point, TP), a mobile switching center, and/or the like. Alternatively, the access network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the access network device may be a relay station, an access point, an in-vehicle device, a wearable device, an access network device in a future evolved public land mobile network (public land mobile network, PLMN), or the like.

In the present disclosure, a communication apparatus configured to implement a function of an access network device may be an access network device, or may be a network device having some functions of the access network device, or may be an apparatus that can support the access network device in implementing the function, for example, a chip system, a hardware circuit, a software module, or a combination of a hardware circuit and a software module. The apparatus may be installed in the access network device or used together with the access network device. In

the method disclosed in the present disclosure, an example in which the communication apparatus configured to implement the function of the access network device is an access network device is used for description.

(2) Terminal device

The terminal device is also referred to as a terminal, a user equipment (user equipment, UE), a mobile station (mobile station, MS), a mobile terminal (mobile terminal, MT), or the like. A terminal device may be a device that provides voice and/or data connectivity for a user. The terminal device may communicate with one or more core networks via an access network device. The terminal device includes a handheld device having a wireless connection function, another processing device connected to a wireless modem, an in-vehicle device, or the like. The terminal device may be a portable, pocket-sized, handheld, computer built-in, or in-vehicle mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile Internet device (mobile internet device, MID), a wearable device such as a smartwatch, a virtual reality (virtual reality, VR) device, an augmented reality (augmented reality, AR) device, a wireless terminal in industrial control (industrial control), a terminal in an Internet of Vehicles system, a wireless terminal in self driving (self driving), a wireless terminal in a smart grid (smart grid), a wireless terminal in transportation safety (transportation safety), a wireless terminal such as a smart fueler in a smart city (smart city), a terminal device on a high-speed railway, and wireless terminals in a smart home (smart home), such as a smart speaker, a smart coffee machine, and a smart printer.

In the present disclosure, a communication apparatus configured to implement a function of a terminal device may be a terminal device, or may be a terminal device having some functions of a terminal, or may be an apparatus that can support the terminal device in implementing the function, for example, a chip system. The apparatus may be installed in the terminal device or used together with the terminal device. In the present disclosure, the chip system may include a chip, or may include a chip and another discrete component. In the technical solutions provided in the present disclosure, an example in which the communication apparatus configured to implement the function of the terminal device is a terminal device or a UE is used for description.

(3) Protocol layer structure between an access network device and a terminal device

Communication between an access network device and a terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, configured to transmit data related to an AI function.

Data transmission between the access network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. The MAC layer generates a transport block, and then wireless transmission is performed through the physical layer. Data is encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

(4) Structure of an access network device

An access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be defined based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, functions of a protocol layer above a PDCP layer are set on the CU, and functions of the PDCP layer and protocol layers below the PDCP layer are set on the DU.

It may be understood that the foregoing processing function division of the CU and the DU based on the protocol layers is merely an example, and there may be other division. For example, the CU or the DU may have functions of more protocol layers through division. For another example, the CU or the DU may have some processing functions of the protocol layers through division. In a design, some functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on delays. Functions whose processing time needs to satisfy a delay requirement are set on the DU, and functions whose processing time does not need to satisfy the delay requirement are set on the CU. In another design, the CU may alternatively have one or more functions of a core network. For example, the CU may be disposed on a network side to facilitate centralized management. In another design, an RU of the DU is disposed remotely. The RU has a radio frequency function.

Optionally, the DU and the RU may be distinguished at a physical layer (physical layer, PHY). For example, the DU can implement higher-layer functions of the PHY layer, and the RU can implement lower-layer functions of the PHY layer. When used for sending, a function of the PHY layer may include cyclic redundancy check (cyclic redundancy check, CRC) code addition, channel coding, rate matching, scrambling, modulation, layer mapping, precoding, resource mapping, physical antenna mapping, and/or a radio frequency sending function. When used for reception, a function of the PHY layer may include CRC, channel decoding, rate de-matching, descrambling, demodulation, layer de-mapping, channel detection, resource de-mapping, physical antenna de-mapping, and/or a radio frequency receiving function. The higher-layer functions of the PHY layer may include some functions of the PHY layer. For example, the some functions are closer to the MAC layer. The lower-layer functions of the PHY layer may include some other functions of the PHY layer. For example, the some functions are closer to the radio frequency function. For example, the higher-layer functions of the PHY layer may include CRC code addition, channel coding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include CRC code addition, channel coding, rate matching, scrambling, modulation, layer mapping, and precoding, and the lower-layer functions of the PHY layer may include resource mapping, physical antenna mapping, and radio frequency sending functions.

For example, functions of the CU may be implemented by one entity, or may be implemented by different entities. For example, the functions of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete functions of the access network device.

In the foregoing architecture, signaling generated by the CU may be sent to a terminal device through the DU, or signaling generated by a terminal device may be sent to the CU through the DU. For example, signaling at the RRC layer or PDCP layer is finally processed as signaling at the physical layer and sent to the terminal device, or is converted from signaling received from the physical layer. In this architecture, the signaling at the RRC layer or PDCP layer may be considered to be sent through the DU, or sent through the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of the present disclosure.

It should be understood that a quantity and types of devices in the communication system shown in FIG. 1 are merely used as an example, and the present disclosure is not limited thereto. In actual application, the communication system may further include more terminal devices and more access network devices, and may further include another network element, for example, may include a core network device and/or a network element configured to implement an artificial intelligence function.

The method provided in the present disclosure may be used for communication between the access network device and the terminal device, and may also be used for communication between other communication devices, for example, communication between a macro base station and a micro base station in a wireless backhaul link, or communication between two terminal devices in a sidelink (sidelink, SL). This is not limited.

In the foregoing communication system, for example, the 5G communication system, application of a massive (massive)-MIMO technology plays a critical role in improving spectral efficiency of the system. Based on the massive-MIMO technology, the access network device may simultaneously send data to a plurality of terminal devices by using a same time-frequency resource, that is, implement multi-user MIMO (multi-user MIMO, MU-MIMO). Alternatively, the access network device may simultaneously send a plurality of data streams to one terminal device, that is, implement single-user MIMO (single-user MIMO, SU-MIMO). A most critical step is that the access network device precodes the data sent to the terminal device. In a precoding technology, spatial multiplexing (spatial multiplexing) may be performed on a plurality of streams of data, so that data between different UEs or data between different data streams of a same UE is spatially isolated, thereby reducing interference between different UEs or between different data streams, and increasing a receive signal to interference plus noise ratio at a UE end. In this way, a downlink data transmission rate can be increased, and interference between data of different streams can be minimized, to increase a signal to interference plus noise ratio (signal to interference plus noise ratio, SINR) at a receiving end, to increase an overall throughput. The access network device precodes downlink data by using a precoding matrix. To obtain the precoding matrix, the access network device may obtain CSI of a downlink channel, to determine the precoding matrix based on the CSI. The CSI belongs to channel information, and is information that can reflect a channel characteristic. For example, the CSI may be represented by using a channel matrix, or it may be understood as that the CSI includes a channel matrix.

In a frequency division duplex (frequency division duplex, FDD)-based communication system widely used currently, uplink and downlink channels do not have mutuality, and the terminal device needs to feed back the CSI, so that the access network device obtains the CSI of the downlink channel. Specifically, the access network device may send a downlink reference signal to the terminal device, and the terminal device estimates (measures), based on the received downlink reference signal, CSI of the downlink channel through which the downlink reference signal passes, and feeds back the estimated CSI to a base station. Optionally, a method for feeding back the CSI by the terminal device to the access network device may further be applied to a time division duplex (time division duplex, TDD) system. This is not limited.

In the massive-MIMO technology, the terminal device feeds back the CSI to the base station, and the base station performs scheduling and resource allocation based on the CSI information fed back by the terminal. Therefore, precision of the fed back CSI is an important factor restricting system performance. Higher precision of the fed back CSI indicates better system performance. Bit information for CSI feedback is carried on an uplink channel. Because a capacity of the uplink channel is limited, CSI overheads cannot be infinitely increased. Feeding back high-precision CSI information with fewer overheads is particularly important for improving system performance. How to feed back high-precision CSI with fewer overheads becomes an important research topic.

To feed back the CSI with fewer overheads, the CSI may be compressed and fed back.

Based on this, the present disclosure provides a method for compressing and feeding back the CSI. In the method, the terminal device first converts obtained channel information of a downlink channel in one or more dimensions, and then compresses and feeds back, based on energy distribution corresponding to the channel information obtained through the conversion in the one or more dimensions, partial information of channel information obtained through the conversion, to reduce CSI feedback overheads, and improve performance of the communication system.

The method provided in the present disclosure relates to artificial intelligence (artificial intelligence, AI). For example, compression processing is performed by using the AI technology on partial information of the channel information obtained through the conversion. AI may be implemented by using various possible technologies, for example, by using a machine learning technology. In the present disclosure, the foregoing communication system may further include a network element for implementing an artificial intelligence function. For example, an AI function (for example, an AI module or an AI entity) may be configured in an existing network element in the communication system to implement an AI-related operation. For example, the existing network element may be an access network device (for example, a gNB), a terminal device, a core network device, a network management system, or the like. The network management system may classify network management work into three types based on an actual requirement of network operation of an operator: operations (Operations), administration (Administration), and maintenance (Maintenance). The network management system may also be referred to as an operations, administration and maintenance (operations, administration and maintenance, OAM) network element, OAM for short. The operations mainly refer to analysis, prediction, planning, and configuration for routine networks and services. Maintenance mainly refers to routine operation activities such as network and service tests and fault management. The network management system can detect a network running status, optimize network connections and performance, improve network running stability, and reduce network maintenance costs. Alternatively, an independent network element may be introduced into the communication system to perform an AI-related operation. The independent network element may be referred to as an AI network element, an AI node, or the like. The name is not limited in the present disclosure. The AI

network element may be directly connected to the access network device in the communication system, or may be indirectly connected to the access network device through a third-party network element. The third-party network element may be a core network element such as an authentication management function (authentication management function, AMF) network element, a user plane function (user plane function, UPF) network element, an OAM, a cloud server, or another network element. This is not limited. For example, refer to FIG. 2. An AI network element 140 is introduced into the communication system shown in FIG. 1. A network element that performs an AI-related operation is a network element with a built-in AI function, or is the foregoing AI network element. This is not limited in the present disclosure. The AI-related operation may also be referred to as an AI function. For details about the AI function, refer to the following sections.

For ease of understanding, the following describes some terms of AI in the present disclosure with reference to A1 to A3. It may be understood that the descriptions are not intended to limit the present disclosure.

A1: AI model

The AI model is a specific implementation of an AI function. The AI model represents a mapping relationship between an input and an output of a model. The AI model may be a neural network, a linear regression model, a decision tree model, a support vector machine (support vector machine, SVM), a Bayesian network, a Q learning model, or another machine learning model. In the present disclosure, the AI function may include at least one of the following: data collection (collection of training data and/or inference data), data preprocessing, model training (or referred to as model learning), model information release (configuration of model information), model verification, model inference, or inference result release. The inference may also be referred to as prediction. In the present disclosure, the AI model may be referred to as a model for short.

In a conventional communication system, rich expertise is required to design a communication module. However, in a deep learning communication system based on a machine learning technology (for example, a neural network), an implicit pattern structure may be automatically discovered from a large quantity of datasets and a mapping relationship between data may be established, to obtain performance better than that of a conventional modeling method.

In the present disclosure, the terminal device side may compress the CSI by using the AI model, and the access network device side may restore the compressed CSI by using the AI model. For example, this can be implemented by deploying an encoder on the terminal device side and deploying a decoder on the access network device side. Specifically, the encoder may be configured to encode or compress the channel information or a channel information-based eigenvector, to obtain the compressed CSI. The decoder may be configured to decode or restore the compressed CSI. In the method in the present disclosure, there may be various AI models used

by the encoder or the decoder, for example, a convolutional network and a transformer network. This is not limited in the present disclosure. The encoder and the decoder may be used together. Alternatively, the decoder may be used and the encoder is not used. This is not limited. Optionally, the encoder (encoder) and the decoder (decoder) may alternatively be two parts included in an auto-encoder (auto-encoder, AE). The auto-encoder is an unsupervised learning neural network, and is characterized by using input data as label data. Therefore, the auto-encoder may also be understood as a self-supervised learning neural network. The self-encoder may be configured to compress and restore data.

A2: Neural network

The neural network is a specific implementation form of an AI or machine learning technology. According to a universal approximation theorem, the neural network can theoretically approximate to any continuous function, so that the neural network can learn any mapping.

An idea of the neural network is from a neuron structure of brain tissue. For example, each neuron performs a weighted summation operation on input values of the neuron, and outputs an operation result by using an activation function. FIG. 3A is a diagram of a neuron structure. It is assumed that inputs of a neuron are $x = [x_0, x_1, \ldots, x_n]$, and weights corresponding to the inputs are respectively $w = [w, w_1, \ldots, w_n]$, where $w_i$ is used as a weight of $x_i$, and is used to weight $x_i$. An offset for performing weighted summation on the input values based on the weights is, for example, b. There may be a plurality of forms of the activation function. Assuming that an activation function of a neuron is $y = f(z) = \max(0, z)$, an output of the neuron is $y =$

$$f\left(\sum_{i=0}^{i=n} w_i * x_i + b\right) = \max\left(0, \sum_{i=0}^{i=n} w_i * x_i + b\right)$$

. For another example, if an activation function of a neuron is $y = f(z) = z$, an output of the neuron is

$$y = f\left(\sum_{i=0}^{i=n} w_i * x_i + b\right) = \sum_{i=0}^{i=n} w_i * x_i + b$$

. $b$, $w_i$, and $x_i$ may be various possible values such as a decimal, an integer (for example, 0, a positive integer, or a negative integer), and a complex number. Activation functions of different neurons in a neural network may be the same or different.

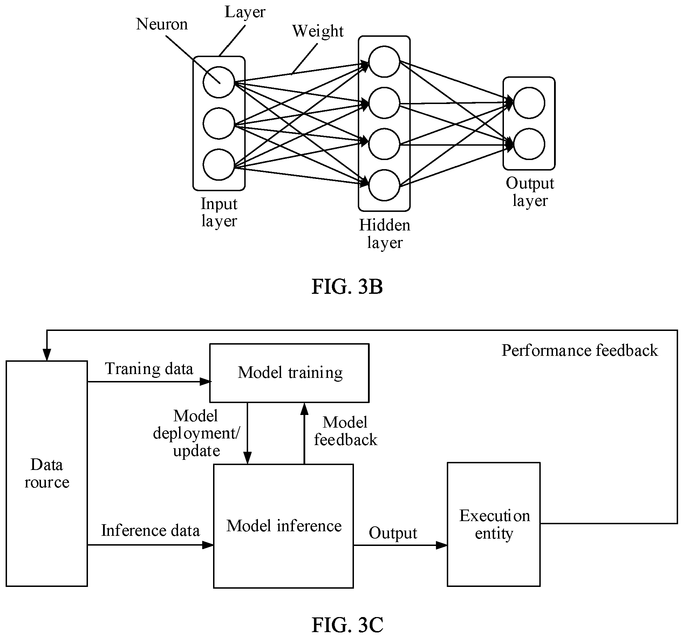

The neural network generally includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer, and the output layer obtains an output result of the neural network. In another implementation, the neural network includes an input layer, a hidden layer, and an output layer. Refer to FIG. 3B. The input layer of the neural network performs neuron processing on received input information, and transfers a processing result to an intermediate hidden layer. The hidden layer performs calculation on the received processing result to obtain a calculation result. The hidden layer transfers the calculation result to the output layer or an adjacent hidden layer. Finally, the output layer obtains an output result of the neural network. One neural network may include one hidden layer, or include a plurality of hidden layers that are sequentially connected. This is not limited.

The neural network in the present disclosure is, for example, a deep neural network (deep neural network, DNN). Based on a network construction manner, the DNN may include a feedforward neural network (feedforward neural network, FNN), a convolutional neural network (convolutional neural network, CNN), and a recurrent neural network (recurrent neural network, RNN).

A3: Training data and inference data

The training data may include an input of the AI model or include an input of the AI model and a target output (label), and is used for training the AI model. For example, the training data includes a plurality of training samples, and each training sample is one input of the neural network. The training data may also be understood as a set of training samples, or referred to as a training dataset. The training dataset is one of important parts of machine learning. In essence, model training is to learn some features from the training data, so that an output of the AI model is as close as possible to the target output, for example, a difference between the output of the AI model and the target output is minimized. The target output may also be referred to as a label. The composition and selection of the training dataset can determine performance of the trained AI model to some extent.

In addition, a loss function may be defined in a training process of the AI model (for example, a neural network).

The loss function describes a gap or difference between an output value of the AI model and a target output value. A specific form of the loss function is not limited in the present disclosure. The training process of the AI model is a process in which a parameter of the AI model is adjusted, so that a value of the loss function is less than a threshold, or a value of the loss function meets a target requirement. For example, the AI model is a neural network, and adjusting a parameter of the neural network includes adjusting at least one of the following parameters: a quantity of layers and a width of the neural network, a weight of a neuron, or a parameter in an activation function of a neuron.

The inference data may be used as an input of a trained AI model for AI model inference. During model inference, the inference data is input into the AI model, to obtain a corresponding output, that is, an inference result.

A4: AI model design

The AI model design mainly includes a data collection phase (for example, collection of training data and/or inference data), a model training phase, and a model inference phase. Further, an inference result application phase may be included. FIG. 3C shows an AI application framework. In the foregoing data collection phase, a data source (data source) is used to provide training data and inference data. In the model training phase, the training data (training data) provided by the data source is analyzed or trained to obtain an AI model. The AI model represents a mapping relationship between an input and an output of the model. Obtaining an AI model through learning by using a model training node is equivalent to obtaining the mapping relationship between the input and the output of the model through learning by using the training data. In the model inference phase, the AI model trained in the model training phase is used to perform inference based on the inference data provided by the data source, to obtain the inference result. This phase may also be understood as follows: The inference data is input into the AI model, to obtain the output through the AI model. The output is the inference result. The inference result may indicate a configuration parameter used (acted) by an execution object, and/or an operation performed by the execution object. The inference result is released in the inference result application phase. For example, the inference result may be planned by an execution (actor) entity in a unified manner. For example, the execution entity may send the inference result to one or more execution objects (for example, a core network device, an access network device, or a terminal device) for execution. For another example, the execution entity may further feed back performance of the model to the data source, to facilitate subsequent model update training.

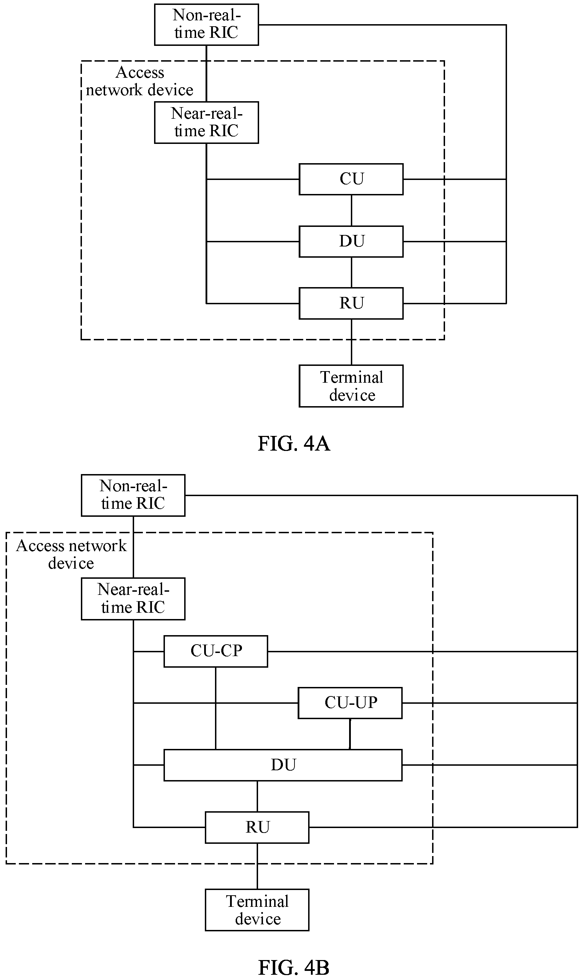

The method provided in the present disclosure may be applied to network architectures shown in FIG. 4A to FIG. 4D.

As shown in FIG. 4A, in a first possible implementation, an access network device includes a near-real-time radio access network intelligent controller (RAN intelligent controller, RIC) module, configured to perform model learning and/or inference. For example, the near-real-time RIC may obtain information on a network side and/or a terminal side from at least one of a CU, a DU, or and RU, and the information may include training data or inference data. For example, the near-real-time RIC may be used to perform model training, and may further perform inference by using a trained model. In addition, optionally, the near-real-time RIC may submit an inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU.

As shown in FIG. 4A, in a second possible implementation, an access network device may include a non-real-time RIC (where optionally, the non-real-time RIC may be located in an OAM or a core network device), configured to perform model learning and inference. For example, the non-real-time RIC may obtain information on a network side and/or a terminal side from at least one of a CU, a DU, and an RU, and the information may include training data or inference data. For example, the non-real-time RIC is used to perform model training, and may further perform inference by using a trained model. In addition, optionally, the non-real-time RIC may submit an inference result to at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU.

As shown in FIG. 4A, in a third possible implementation, an access network device includes a near-real-time RIC, and a non-real-time RIC is located outside the access network device (where optionally, the non-real-time RIC may be located in an OAM or a core network device). Same as the second possible implementation, the non-real-time RIC may be used to perform model learning and/or inference; and/or same as the first possible implementation, the near-real-time RIC may be used to perform model learning and/or inference; and/or the near-real-time RIC may obtain AI model information from the non-real-time RIC, obtain information on a network side and/or a terminal side from at least one of a CU, a DU, or an RU, and obtain an inference result by using the information and the AI model information. Optionally, the near-real-time RIC may submit the inference result to at least one of the CU, the DU, or the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC is used to perform model training and perform inference by using a trained model. For example, the non-real-time RIC is used to perform model training and perform inference by using a trained model. For example, the non-real-time RIC is used to perform model training, and submit a trained model to the near-real-time RIC, and the near-real-time RIC performs inference by using the trained model.

FIG. 4B is an example diagram of a network architecture to which a method according to the present disclosure can be applied. In comparison with FIG. 4A, a CU in FIG. 4B is separated into a CU-CP and a CU-UP.

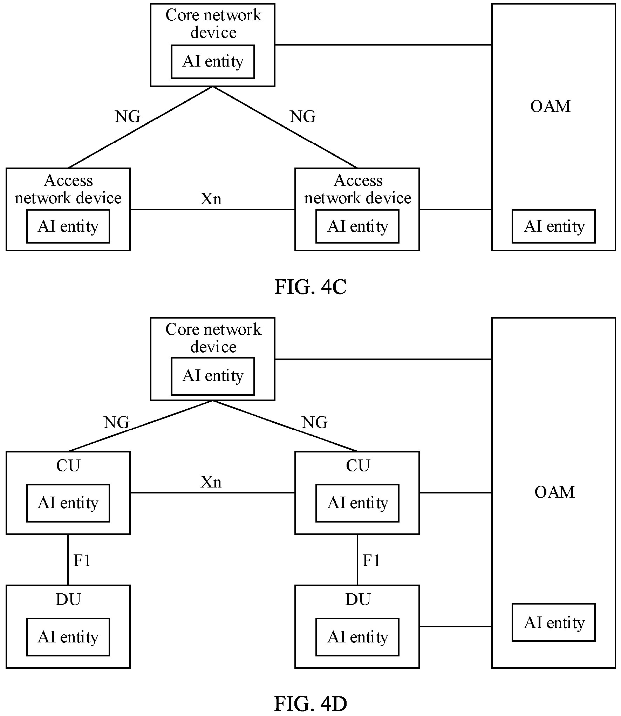

FIG. 4C is an example diagram of a network architecture to which a method according to the present disclosure can be applied. As shown in FIG. 4C, optionally, an access network device includes one or more AI entities, and a function of the AI entity is similar to that of the near-real-time RIC. Optionally, an OAM includes one or more AI entities, and a function of the AI entity is

similar to that of the non-real-time RIC. Optionally, a core network device includes one or more AI entities, and a function of the AI entity is similar to that of the non-real-time RIC. When the OAM and the core network device each include an AI entity, models obtained through training by the AI entities of the OAM and the core network device are different, and/or models used for inference are different.

In the present disclosure, that the models are different includes at least one of the following: structure parameters (for example, quantities of layers and/or weights of the models) of the models are different, input parameters of the models are different, or output parameters of the models are different.

FIG. 4D is an example diagram of a network architecture to which a method according to the present disclosure can be applied. In comparison with FIG. 4C, an access network device in FIG. 4D is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models used for inference are different. Optionally, the CU in FIG. 4D may be further split into a CU-CP and a CU-UP. Optionally, one or more AI models may be deployed in the CU-CP; and/or one or more AI models may be deployed in the CU-UP. Optionally, in FIG. 4C or FIG. 4D, the OAM of the access network device and the OAM of the core network device may be separately and independently deployed.

In the present disclosure, one parameter or a plurality of parameters may be obtained through inference by using one model. Learning processes of different models may be deployed on different devices or nodes, or may be deployed on a same device or node. Inference processes of different models may be deployed on different devices or nodes, or may be deployed on a same device or node.

The following further describes in detail a method for compressing and feeding back CSI provided in the present disclosure with reference to the accompanying drawings.

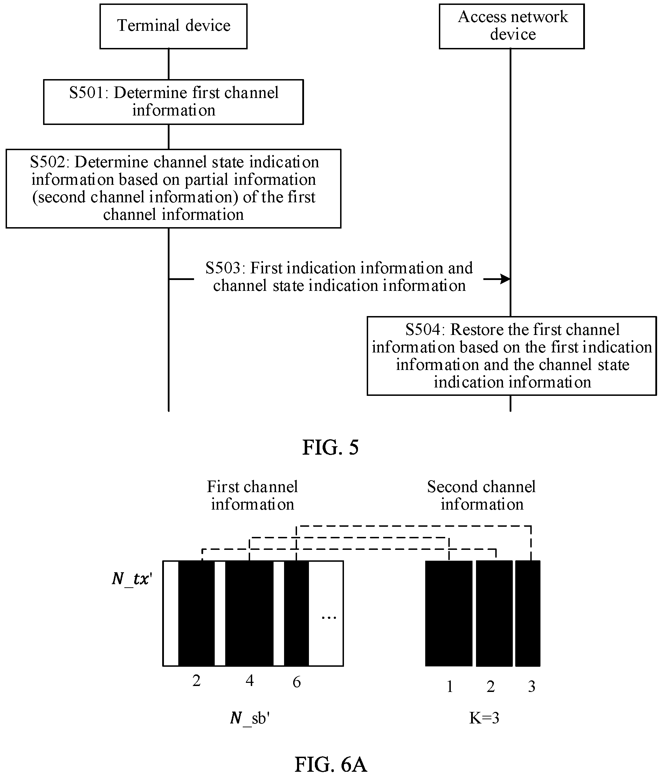

FIG. 5 shows a communication method. The method mainly includes the following procedure.

S501: A terminal device determines first channel information.

The first channel information includes information in M1 dimensions, and M1 is a positive integer greater than 1. This is not limited in the present disclosure.

Specifically, the terminal device may convert obtained channel information of a downlink channel in at least one dimension, to determine the first channel information. The channel information (for example, the first channel information or third channel information) described in the present disclosure may correspond to the foregoing channel state information CSI. The channel information may be original channel information of the channel, or may be a channel characteristic based on the original channel information.

For example, the channel information of the downlink channel is denoted as third channel information, where the third channel information includes information in M2 dimensions, and M2 is equal to M1. Depending on a quantity of dimensions involved in conversion, an information type of at least one dimension in the M2 dimensions and an information type of at least one dimension in the M1 dimensions are different. In addition, for understanding of obtaining the channel information (for example, CSI) of the downlink channel by the terminal device, refer to the foregoing content. Details are not described again in the present disclosure.

Optionally, the M2 dimensions may include a space domain and a frequency domain, and information types of the M2 dimensions include space domain information and frequency domain information. If the third channel information is the original channel information of the channel, the third channel information may be represented as a matrix. The matrix is a two-dimensional matrix whose dimension size is $(N\_rx*\_tx)*N\_sb$. A size of the matrix in a first dimension is $N\_rx*N\_tx$, where $N\_rx*N\_tx$ corresponds to a space domain dimension, $N\_rx$ corresponds to a receive port dimension, for example, representing a quantity of receive ports, and $N\_tx$ corresponds to a transmit port dimension, for example, representing a quantity of transmit ports. A size of the matrix in a second dimension is $N\_sb$, where $N\_sb$ corresponds to a frequency domain dimension. For example, $N\_sb$ represents a quantity of frequency domain units. $N\_rx*N\_tx$ is a row vector size of the matrix, and $N\_sb$ is a column vector size of the matrix. If the third channel information is the channel characteristic based on the original channel information, or described as a characteristic subspace of an original channel, for example, a channel characteristic obtained by performing singular value decomposition (singular value decomposition, SVD) on the original channel information, a dimension of the matrix corresponding to the third channel information may be represented as $N\_tx*N\_sb,$ where $N\_tx$ corresponds to a space domain dimension and represents a port dimension, $N\_sb$ represents a frequency domain unit dimension, $N\_tx$ is a row vector of the matrix, and $N\_sb$ is a column vector of the matrix.

When dimension conversion is performed on the matrix, corresponding angle domain information (or referred to as angle information) may be obtained by performing conversion processing on space domain information, and corresponding delay domain information (delay path information) may be obtained by performing conversion processing on frequency domain information. To be specific, the M1 dimensions may include an angle domain corresponding to the space domain and/or a delay domain corresponding to the frequency domain, and the information types of the M1 dimensions may include the angle domain information corresponding to the space domain information and/or the delay domain information corresponding to the frequency domain information. For example, in a case in which the third channel information is the original channel information of the channel, when only space domain conversion is performed, a dimension of the first channel information may be represented as $(N\_rx'*N\_tx')*N\_sb$; or when frequency domain conversion is performed, a dimension of the first channel information may be represented as $(N\_rx*N\_tx)*N\_sb'$; or when space domain conversion and frequency domain conversion are performed, a dimension of the first channel information may be represented as $(N\_rx'*N\_tx')*N\_sb'$. $N\_rx'*N\_tx'$ corresponds to an angle domain dimension, and $N\_sb'$ corresponds to a delay domain dimension and represents a delay domain unit. For example, in a case in which the third channel information is an original channel information-based eigenvector, when only space domain conversion is performed, a dimension of the first channel information may be represented as $N\_tx'*N\_sb$; or when frequency domain conversion is performed, a dimension of the first channel information may be represented as $N\_tx*N\_sb'$; or when space domain conversion and frequency domain conversion are performed, a dimension of the first channel information may be represented as $N\_tx'*N\_sb'$. $N\_tx'$ corresponds to an angle domain dimension, and $N\_sb'$ corresponds to a delay domain dimension and represents a delay domain unit.

Performing conversion processing in different dimensions can implement sparse characteristics in different dimensions, and complete multi-dimensional compression, thereby reducing CSI feedback overheads and improving performance of a communication system.

Specifically, the conversion processing may be implemented by using a discrete Fourier transform (discrete fourier transform, DFT) algorithm, and information obtained by performing DFT transform on the third channel information in at least one dimension may be described as a projection coefficient corresponding to the third channel information. If the third channel information is the original channel information of the channel, the projection coefficient corresponding to the third channel information may alternatively be described as a channel projection coefficient. If the third channel information is the original channel information-based eigenvector, the projection coefficient corresponding to the third channel information may alternatively be described as an eigenvector projection coefficient. For example, dimensions involved in the conversion processing include the space domain and the frequency domain. In this case, a projection coefficient obtained by performing two times of DFT transform on the third channel information may alternatively be described as angle-delay domain information.

For example, the third channel information is the original channel information-based eigenvector. The terminal device may perform two times of DFT transform on the third channel information in the following manner, to obtain the angle-delay domain information. The third channel information may be represented as a complex matrix whose dimension size is $N\_tx*N\_sb,$ and the third channel information is denoted as $V$, where $V \in \mathcal{C}^{N\_tx*N\_sb}$. Two groups of DFT bases may be generated based on the third channel information and a DFT formula, and are a space domain basis S and a frequency domain basis $F$ respectively, where the space domain basis S includes $N\_tx$ DFT column vectors of $N\_tx*1$, or is described as $S \in \mathcal{C}^{N\_tx*N\_tx}$; and the frequency domain basis $F$ includes $N\_sb$ DFT column vectors of $N\_sb*1$, or is described as $F \in \mathcal{C}^{N\_sb*N\_sb}$.

A specific form of S is related to an antenna panel. For example, assuming that the antenna panel is dual-polarized, a horizontal element is $Nh,$ and a vertical element is $Nv,$ an obtained representation form of S is as follows:

$$S = \begin{bmatrix} \mathrm{kron}(\mathrm{DFT}(Nv), \mathrm{DFT}(Nh)) & 0 \\ 0 & \mathrm{kron}(\mathrm{DFT}(Nv), \mathrm{DFT}(Nh)) \end{bmatrix}.$$

kron() represents a Kronecker product. DFT(Nv) represents a DFT matrix whose size is $Nv * Nv$, and similarly, DFT(Nh) represents a DFT matrix whose size is $Nh * Nh$.

A representation form of $F$ is related to $N\_sb,$ and a specific formula is $F = \mathrm{DFT}(N\_sb)$. $DFT(N\_sb)$ represents a DFT matrix whose size is $N\_sb * N\_sb$.

Further, with reference to the foregoing two times of DFT transform, a projection coefficient of space-frequency joint projection may be obtained by using the following formula:

$$C_{complex} = S^H * V * F.$$

$C_{complex}$ represents the projection coefficient, namely, angle-delay domain information. $C_{complex}$ is a complex matrix whose dimension size is $N\_tx'*N\_sb'$, or described as $C_{complex} \in \mathcal{C}^{N\_tx'*N\_sb'}$. $S^H$ is a Hermitian (Hermitian) array of $S$, also referred to as a conjugate transpose matrix, or it is described as obtaining $S^H$ by performing conjugate transpose on the matrix S.

During DFT, an oversampling factor may be further added. For example, oversampling factors in both space domain and frequency domain are 4. The complex matrix $C_{complex}$ obtained by performing the foregoing operations is a sparse representation of the original channel information-based eigenvector, and the dimension size of $C_{complex}$ is consistent with that of the eigenvector before the projection. In other words, a value of $N\_tx'$ is equal to that of $N\_tx$, and a value of $N\_sb'$ is equal to that of $N\_sb$.

Further, the terminal device may determine the first channel information with reference to the following two optional implementations.

In one optional implementation, the terminal device may directly determine, as the first channel information, information obtained by performing conversion processing on the third channel information in at least one dimension.

In the other optional implementation, the terminal device may perform conversion processing on the third channel information in at least one dimension to obtain fourth channel information. Further, the terminal device performs cyclic shift on the fourth channel information to obtain the first channel information. In other words, the first channel information is cyclic shift information of the fourth channel information. Specifically, an access network device usually sends downlink data by using an eigenvector zero force (eigenvector zero force, EZF) precoding algorithm. Therefore, when any phase rotation such as the foregoing cyclic shift is performed on information corresponding to channel information in each frequency domain unit dimension, correlation between the channel information remains unchanged, and the performance of the communication system is not affected. This manner may be applied to a scenario in which the at least one dimension involved in the foregoing conversion processing includes a frequency domain. For example, the third channel information is the original channel information-based eigenvector, and is represented as a matrix whose dimension size is $N\_tx*N\_sb$. The terminal device may specifically perform column cyclic shift on the fourth channel information, to obtain the first channel information.

For example, the $N\_sb$ dimension corresponds to $N\_sb$ columns, idx represents a number (or referred to as an index) of a column, and idx is an integer ranging from 0 to $N\_sb$-1. If the $N\_sb$ columns are circularly shifted rightward by p bits, an index of information whose index is idx before the shift is updated to a value obtained by performing a modulo operation on $N\_sb$ by using (idx+p) after the shift. For example, p is 2, and $N\_sb$ is 5. For example, five pieces of information before the shift are A, B, C, D, and E. Before the shift, indexes of the five pieces of information are 0, 1, 2, 3, and 4. After the five pieces of information are cyclically shifted rightward by two bits, the five pieces of information are arranged as D, E, A, B, and C, and indexes of the five pieces of shifted information are 0, 1, 2, 3, and 4. Alternatively, if the $N\_sb$ columns are circularly shifted leftward by p bits, an index of information whose index is idx before the shift is updated to a value obtained by performing a modulo operation on $N\_sb$ by using (idx-p+$N\_sb$). For example, p is 2, and $N\_sb$ is 5. For example, five pieces of information before the shift are A, B, C, D, and E. Before the shift, indexes of the five pieces of information are 0, 1, 2, 3, and 4. After the five pieces of information are cyclically shifted leftward by two bits, the five pieces of information are arranged as C, D, E, A, and B, and indexes of the five pieces of shifted information are 0, 1, 2, 3, and 4. The fourth channel information including the original columns and the first channel information including the updated columns have a same effect when being subsequently used to restore the channel information, and almost do not affect system performance.

In addition, optionally, the terminal device may report, to the access network device, a conversion parameter involved in the conversion processing process. The conversion parameter may include one or more of the following: a dimension for conversion processing, for example, space domain conversion or frequency domain conversion corresponding to one-dimensional conversion, or space domain conversion and frequency domain conversion corresponding to two-dimensional conversion, or a sampling feature used during conversion using a DFT algorithm, for example, an oversampling factor or an oversampling DFT weight.

S502: The terminal device determines channel state indication information based on second channel information.

The second channel information indicates partial information of the first channel information described in S501. For example, information in an $i^{th}$ dimension in the M1 dimensions of the first channel information includes $N_i$ pieces of information, where $i$ is a positive integer ranging from 1 to M1, and $N_i$ is a positive integer greater than 1. The second channel information may indicate partial information of $N_m$ pieces of information in an $m^{th}$ dimension in the M1 dimensions, where m is a positive integer from 1 to M1. In addition, the second channel information may further indicate $N_i$ pieces of information in dimensions other than the $m^{th}$ dimension in the M1 dimensions.

Optionally, in the present disclosure, indexes of information may be numbered from 1, or may be numbered from 0, or may be numbered from another possible number. This is not limited. For example, that "i is a positive integer ranging from 1 to M1" may be replaced with "i is a positive integer ranging from 0 to M1-1".

Specifically, the channel state indication information may indicate encoded information of the second channel information. The terminal device may determine the channel state indication information with reference to the following optional implementations.

In an optional implementation, the terminal device may compress the second channel information to obtain the channel state indication information. Specifically, the terminal device may compress the second channel information by using an encoder, to obtain the channel state indication information. An input of the encoder is determined based on the second channel information, and an output of the encoder includes the channel state indication information.

In another optional implementation, the terminal device may compress and quantize the second channel information to obtain the channel state indication information. Specifically, the terminal device may compress the second channel information by using an encoder. An input of the encoder is determined based on the second channel information, and an output of the encoder includes compressed second channel information. Further, the terminal device quantizes the compressed second channel information by using a quantizer, to obtain the channel state indication information. Alternatively, when the encoder has a quantization function, the second channel information may be compressed and quantized by using the encoder. In this case, the input of the encoder is determined based on the second channel information, and the output of the encoder includes the channel state indication information.

Specifically, the partial information that is of the $N_m$ pieces of information in the $m^{th}$ dimension and that is indicated by the second channel information may be information with high energy in the $N_m$ pieces of information. For example, the partial information of the $N_m$ pieces of information in the $m^{th}$ dimension includes K pieces of information, energy of any one of the K pieces of information is greater than or equal to energy of any one of the $N_m$ pieces of information in the $m^{th}$ dimension other than the K pieces of information, and K is a positive integer greater than or equal to 1. It may be understood that the second channel information may be information whose energy ranks top K in the $N_m$ pieces of information in the $m^{th}$ dimension. For example, corresponding to the case in which the M1 dimensions include the angle domain dimension and the delay domain dimension described in S501, and the $m^{th}$ dimension is a delay domain dimension, the dimensions in the M1 dimensions other than the $m^{th}$ dimension are angle domain dimensions. The $N_m$ pieces of information in the $m^{th}$ dimension correspond to the size $N\_sb'$ of the delay domain dimension, and a value of $N_m$ is the same as a value of $N\_sb'$. A $j^{th}$ piece of information in the $N_m$ pieces of information in the $m^{th}$ dimension corresponds to a $j^{th}$ delay path, and j is a positive integer ranging from 1 to $N_m$, or is described as a positive integer ranging from 1 to $N\_sb'$. A dimension of the $j^{th}$ piece of information is $N\_tx'$, and indicates angle information on the $j^{th}$ delay path. Energy of the $j^{th}$ piece of information is a sum of energy values corresponding to all angle information on the $j^{th}$ delay path. The sum of energy values corresponding to all the angle information on the $j^{th}$ delay path is equal to a sum of amplitude squares of complex numbers corresponding to all the angle information on the $j^{th}$ delay path. The angle information may also be described as port information. As described above, the angle information may be obtained by performing DFT transform on space domain information.

Specifically, the foregoing channel state indication information may be specifically represented as a sequence including binary bits, and the channel state indication information includes bits corresponding to the K pieces of information.

In an optional implementation, a value of K may be a preset value, for example, a positive integer such as 2 or 3. Alternatively, to match different bandwidth configurations and implement a more flexible solution, the value of K may be determined based on a preset proportion $\beta$ and $N_m$. The value of K is denoted as floor($N_m \times \beta$), and floor represents a rounding down operator; or the value of K is ceiling($N_m \times \beta$), and ceiling indicates a rounding up operator. The preset proportion $\beta$ may be represented as a decimal between 0 and 1, for example, 0.6; or the preset proportion $\beta$ may be represented as a percentage value between 1% and 100%, for example, 60%. Quantities of bits that correspond to different information in the K pieces of information and that are in the channel state indication information may be the same or different. For example, it may be set that information with higher energy in the K pieces of information corresponds to a larger quantity of bits.

In another optional implementation, the access network device may send second indication information to the terminal device, to indicate the value of K and/or a quantity of bits that are in the channel state indication information and that correspond to each of the K pieces of information. Quantities of bits corresponding to different information in the K pieces of information may be the same or different. For example, it may be set that information with higher energy in the K pieces of information corresponds to a larger quantity of bits. Optionally, the access network device may send, to the terminal device, a broadcast message carrying the second indication information, radio resource control (radio resource control, RRC) signaling, MAC control element (MAC control element, MAC-CE) signaling, downlink control information (downlink control information, DCI) signaling, or the like.

Specifically, a relationship table may be predefined in a protocol or pre-configured by the access network device for the terminal by using signaling. The relationship table indicates a correspondence between the value of K and bit allocation in the channel state indication information.

In a design, for the relationship table, refer to Table 1.

**Table 1**

| Serial number | Total quantity of bits in channel state indication information | K | Bit allocation in the channel state indication information |
|---|---|---|---|
| 1 | 59 | 2 | [30, 21] |
| 2 | 90 | 3 | [33, 24, 21] |

Table 1 may be applied to the foregoing two implementations related to the value definition of K.

For example, corresponding to the foregoing case in which the value of K is a preset value, for example, 3, the terminal device may determine corresponding channel state indication information based on bit allocation corresponding to K being 3 in Table 1, and send the channel state indication information to the access network device. When receiving the channel state indication information, the access network device may query Table 1 based on the preset value (3) of K, to determine a bit allocation status in the information state indication information.

For example, corresponding to the foregoing case in which K is determined based on the preset proportion $\beta$ and $N_m$, the terminal device may first determine the value of K based on the preset proportion $\beta$ and $N_m$. For example, when the preset proportion $\beta$ is 0.6, and $N_m$ is 5, the value of K is 3. Further, the terminal device may determine corresponding channel state indication information based on bit allocation corresponding to K being 3 in Table 1, and send the channel state indication information to the access network device. When receiving the channel state indication information, the access network device may determine the value of K based on the preset proportion $\beta$ and $N_m$, and then query Table 1 based on the value (3) of K, to determine a bit allocation status in the information state indication information.

For example, corresponding to the foregoing implementation in which the access network device sends the second indication information to the terminal device, the first row in Table 1 is used as an example. The second indication information sent by the access network device to the terminal device may indicate the serial number 1. In this case, the terminal device may query Table 1 based on the second indication information, and determine that the value of K is 2, and that the corresponding total quantity of bits in the information state indication information is 59 and may be divided into two parts: 30 bits and 21 bits. According to the rule that information with higher energy in the K pieces of information corresponds to a larger quantity of bits, the terminal device may further determine that a quantity of bits that correspond to larger information in 2(K) pieces of information and that are in the channel state indication information is 30, and that a quantity of bits that correspond to smaller information in the 2(K) pieces of information and that are in the channel state indication information is 21.

Optionally, in Table 1, the total quantity of bits in the channel state indication information may alternatively be empty, and the total quantity of bits in the channel state indication information may be calculated based on bit allocation in the channel state indication information.

In another design, for the relationship table, refer to the following Table 2.

**Table 2**

| Serial number | K | Bit allocation in channel state indication information |
|---|---|---|
| 1 | 2 | {0.9, 0.8} |
| 2 | 3 | {0.9, 0.8, 0.7} |

As shown in Table 2, the bit allocation in the channel state indication information is a preset proportion combination $\alpha$. The preset proportion combination $\alpha$ includes K elements, as shown in the first row in Table 2. When K is 2, the preset proportion combination $\alpha$ = {0.9, 0.8}. When K is 3, the preset proportion combination $\alpha$ = {0.9, 0.8, 0.7}. The value of K may be a preset value, or may be determined based on the preset proportion $\beta$ and $N_m$, or may be a value indicated by the access network device to the terminal device. Details are not described again in the present disclosure.

In such a design, the access network device may send, to the terminal device, a basic bit quantity A for determining bit allocation. After determining the value of K, the terminal device or the access network device queries Table 2 based on K to obtain a preset proportion combination $\alpha$. Further, the terminal device or the access network device may determine the bit allocation in the channel state indication information based on the basic bit quantity A and the preset proportion combination $\alpha$. Specifically, the bit allocation in the channel state indication information is floor (A*$\alpha$) or ceiling (A*$\alpha$). floor represents rounding down, and ceiling represents rounding up.

Specifically, for an arrangement manner of the K pieces of information, refer to the following optional implementations for understanding.

In an optional implementation, the K pieces of information may be arranged by sorting energy levels, to facilitate distinguishing between energy of the K pieces of information. For example, energy of a $k^{th}$ piece of information in the K pieces of information is greater than energy of a (k+1)$^{th}$ piece of information, K is a positive integer greater than 1, and k is a positive integer ranging from 1 to K+1.

For example, corresponding to the case in which the M1 dimensions include the angle domain dimension and the delay domain dimension and the matrix dimension corresponding to the first channel information is $N\_tx'*N\_sb'$ described in S501, the $m^{th}$ dimension in the M1 dimensions may be the angle domain dimension or the delay domain dimension. In other words, an information type of the $m^{th}$ dimension includes delay domain information or angle domain information. For example, the $m^{th}$ dimension in the M1 dimensions is the delay domain dimension. The second channel information may be represented as a matrix with a dimension of $N\_tx'*K$, where the second channel information includes the first K pieces of information with high energy in the foregoing $N_m$ pieces of information in the $m^{th}$ dimension. Corresponding to the foregoing solution in which the terminal device may compress the second channel information by using the encoder, in this example, a dimension of data input to the encoder is $N\_tx'*K$, and each column of data input to the encoder is arranged based on energy levels, that is, energy decreases from left to right.

FIG. 6A is a diagram of an arrangement of information. In comparison with the first channel information, a row vector of the second channel information extracted from the first channel information remains unchanged, and a column vector of the second channel information changes from $N\_sb'$ to K. The energy of the K pieces of information decreases from left to right. It is represented as that a black rectangular box of the (k+1)$^{th}$ piece of information is narrower than that corresponding to the k$^{th}$ piece of information. As shown in FIG. 6A, K is 3. A wider black rectangular box indicates information with higher energy. A first piece of information in K corresponds to a fourth piece of information in the first channel information, a second piece of information in K corresponds to a second piece of information in the first channel information, and a third piece of information in K corresponds to a sixth piece of information in the first channel information.

For example, information with higher energy in the K pieces of information corresponds to a larger quantity of bits. Using the bit allocation shown in Table 1 as an example, the first piece of information in the three pieces of information shown in FIG. 6A corresponds to a quantity of bits of 33 in the channel state indication information, the second piece of information in the three pieces of information corresponds to a quantity of bits of 24 in the channel state indication information, and the third piece of information in the three pieces of information corresponds to a quantity of bits of 21 in the channel state indication information.

Alternatively, the foregoing K pieces of information are jointly encoded. To be specific, the K pieces of information are all indicated by using one piece of joint information. When the K pieces of information are restored by using the joint information, the K pieces of information may be restored simultaneously by using the joint information. For example, a quantity of bits of the joint information is 33+24+21=78, and the 78-bit information jointly indicates the three pieces of information shown in FIG. 6A.

In another optional implementation, the K pieces of information may be arranged based on a sequence in the first channel information, so that a relative relationship between original information in the first channel information is retained or extracted in a compression process, thereby improving performance of the communication system. For example, a sequence of indexes of a k$^{th}$ piece of information and a (k+1)$^{th}$ piece of information in the K pieces of information is the same as a sequence of indexes of first information and second information in the first channel information, the k$^{th}$ piece of information corresponds to the first information, the (k+1)$^{th}$ piece of information corresponds to the second information, K is a positive integer greater than 1, and k is a positive integer ranging from 1 to K-1.

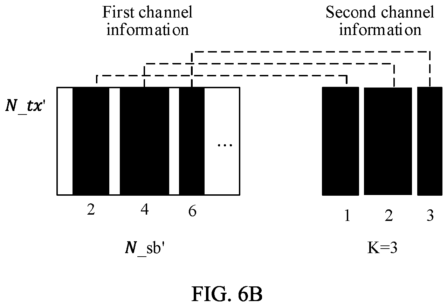

For example, corresponding to the case in which the M1 dimensions include the angle domain dimension and the delay domain dimension and the first channel information is represented as a matrix of $N\_tx'*N\_sb'$ described in S501, the $m^{th}$ dimension in the M1 dimensions may be the angle domain dimension or the delay domain dimension. In other words, an information type of the $m^{th}$ dimension includes delay domain information or angle domain information. For example, the $m^{th}$ dimension in the M1 dimensions is the delay domain dimension. The second channel information may be represented as a matrix with a dimension of $N\_tx'*K$, where the second channel information represents the first K pieces of information with high energy in the foregoing $N_m$ pieces of information in the $m^{th}$ dimension. FIG. 6B is a diagram of another arrangement of information. In comparison with the first channel information, a row vector of the second channel information extracted from the first channel information remains unchanged, and a column vector of the second channel information changes from $N\_sb'$ to K. The K pieces of information are arranged from left to right based on the sequence of the information corresponding to the K pieces of information in the first channel information. As shown in FIG. 6B, K is 3. A first piece of information in K corresponds to a second piece of information in the first channel information, a second piece of information in K corresponds to a fourth piece of information in the first channel information, and a third piece of information in K corresponds to a fifth piece of information in the first channel information.

For example, information with higher energy in the K pieces of information corresponds to a larger quantity of bits. The bit allocation shown in Table 1 is used as an example. In the three pieces of information shown in FIG. 6B, energy of the second piece of information is greater than energy of the first piece of information, and the energy of the first piece of information is greater than energy of the third piece of information. In this case, the second piece of information corresponds to the quantity of bits of 33 in the channel state indication information, the first piece of information corresponds to the quantity of bits of 24 in the channel state indication information, and the third piece of information corresponds to the quantity of bits of 21 in the channel state indication information.

Alternatively, the foregoing K pieces of information are jointly encoded. To be specific, the K pieces of information are all indicated by using one piece of joint information. When the K pieces of information are restored by using the joint information, the K pieces of information may be restored simultaneously by using the joint information. For example, a quantity of bits of the joint information is 33+24+21=78, and the 78-bit information jointly indicates the three pieces of information shown in FIG. 6B.

In addition, optionally, whether the K pieces of information are distributed by sorting energy levels or distributed based on locations in the first channel information may be predefined or may be determined through pre-negotiation between the access network device and the terminal device. Alternatively, the access network device may send third indication information to the terminal device, where the third indication information indicates the distribution manner of the K pieces of information, and the third indication information may be sent by using RRC signaling, MAC-CE signaling, or DCI signaling. This is not limited in the present disclosure.

Further, the terminal device may record a location of the second channel information in the first channel information. Specifically, the terminal device records an index of information that corresponds to the $k^{th}$ piece of information in the K pieces of information in the $m^{th}$ dimension and that is in the $N_m$ pieces of information in the $m^{th}$ dimension.

S503: The terminal device sends first indication information and the channel state indication information to the access network device.

The first indication information indicates the location of the second channel information in the first channel information.

In an optional implementation, the first indication information may indicate indexes of information that corresponds to the K pieces of information in the $m^{th}$ dimension and that is in the $N_m$ pieces of information in the $m^{th}$ dimension.

Optionally, the first indication information may be quantized information of the indexes indicated by the first indication information, and is specifically represented as a sequence including binary bits. A process in which the terminal device generates the first indication information may be briefly described as location quantization. For example, the information type corresponding to the $m^{th}$ dimension is delay domain information, and an index of each piece of delay domain information may be represented by using four bits. The partial information of the $N_m$ pieces of information in the $m^{th}$ dimension is the K pieces of information, and the first indication information indicates K indexes. In this case, the first indication information may specifically include 4*K bits.

In another optional implementation, if the partial information, namely, the K pieces of information, that are of the $N_m$ pieces of information in the $m^{th}$ dimension and that are indicated by the second channel information include a $t^{th}$ piece of information in the $N_m$ pieces of information, the first indication information may indicate a location, in the first channel information, of information other than the $t^{th}$ piece of information in the second channel information, t is a value agreed on in a protocol or a value pre-configured by the access network device for the terminal device by using signaling. Specifically, the first indication information may indicate indexes of information that corresponds to information other than the $t^{th}$ piece of information in the partial information and that is in the $N_m$ pieces of information.

Optionally, the first indication information may be quantized information of the indexes indicated by the first indication information, and is specifically represented as a sequence including binary bits. A process in which the terminal device generates the first indication information may be briefly described as location quantization. For example, the information type corresponding to the $m^{th}$ dimension is delay domain information, and an index of each piece of delay domain information may be represented by using four bits. When the partial information of the $N_m$ pieces of information in the $m^{th}$ dimension is the K pieces of information, the first indication information indicates indexes of K-1 other than the $t^{th}$ piece of information, and the first indication information may specifically include 4*(K-1) bits.

For example, the information type corresponding to the $m^{th}$ dimension is the delay domain information, and the first channel information is information obtained by converting the third channel information from a frequency domain to a delay domain and then performing cyclic shift on the third channel information. In addition, the foregoing $t^{th}$ piece of information in the second channel information may be information with maximum energy in the $N_m$ pieces of information in the $m^{th}$ dimension. For example, t is 1. In other words, energy of a first piece of information in the $N_m$ pieces of information in the $m^{th}$ dimension of the first channel information may be maximized through cyclic shift, and the K pieces of information include the first piece of information. In this case, the terminal device does not need to indicate an index of the first piece of information in the first indication information, and only indexes of information that corresponds to K-1 pieces of information other than the first piece of information in the K pieces of information and that is in the $N_m$ pieces of information need to be indicated. For example, K is 3, a first piece of information in the K pieces of information corresponds to the first piece of information in the $N_m$ pieces of information, a second piece of information in the K pieces of information corresponds to a third piece of information (an index 3) in the $N_m$ pieces of information, a third piece of information in the K pieces of information corresponds to the fifth piece of information (an index 5) in the $N_m$ pieces of information. In this example, the first indication information indicates the index 3 and the index 5 in the $N_m$ pieces of information. For example, 0000 is used to represent an index 1,0001 is used to represent an index 2, 0010 is used to represent the index 3, 0011 is used to represent an index 4, and 0100 is used to represent the index 5. In this example, the first indication information indicates only 0010 and 0100. In this way, overheads related to location information feedback can be reduced.

S504: The access network device restores the first channel information based on the first indication information and the channel state indication information.

Specifically, corresponding to the description in S503, the access network device may restore the location of the second channel information in the first channel information based on the first indication information. This process may be briefly described as inverse location quantization. The access network device restores the second channel information based on the channel state indication information.

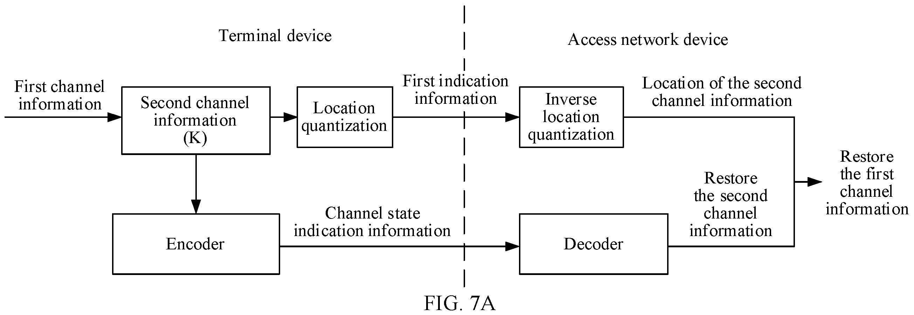

In an optional implementation, corresponding to the description in S502, if the channel state indication information is the output of the encoder, the access network device may restore the second channel information based on the channel state indication information by using the decoder. FIG. 7A is a diagram of a type of encoding and decoding interaction. The input of the decoder is determined based on the channel state indication information, and the output of the decoder includes the restored second channel information. It may be understood that the decoder matches the encoder. If encoding has a quantization function, the decoder has a dequantization function.

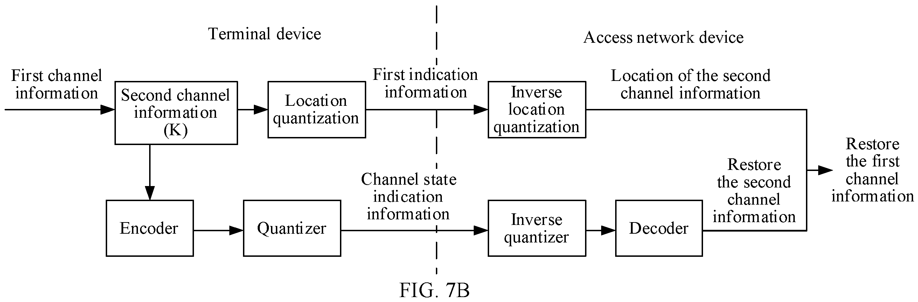

In another optional implementation, corresponding to the description in S502, if the channel state indication information is an output of the quantizer, the access network device may perform inverse quantization on the channel state indication information by using an inverse quantizer to obtain inverse quantization information of the channel state indication information, and then restore the second channel information based on the inverse quantization information by using the decoder. FIG. 7B is a diagram of a type of encoding and decoding interaction. An input of an inverse quantizer includes the channel state indication information, and an output of the inverse quantizer includes inverse quantization information of the channel state indication information. The input of the decoder is determined based on the inverse quantization information output by the quantizer, and the output of the decoder includes the restored second channel information.

The access network device then restores the first channel information based on the location of the second channel information and the restored second channel information. Corresponding to the description in S502, the second channel information is partial information of the first channel information. When restoring the first channel information, the access network device may fill 0 in a location other than the second channel information. Alternatively, it is understood that in step S504, both the first channel information restored by the access network device and the first channel information described in S501 include the second channel information, the first channel information restored by the access network device is different from information other than the second channel information in the first channel information described in S501, and information other than the second channel information in the first channel information restored by the access network device is 0.

Optionally, the access network device may further perform inverse transform in at least one dimension on the first channel information to reconstruct the channel information of the downlink channel. The at least one dimension involved in the inverse transform performed by the access network device is consistent with the at least one dimension involved in the transform performed by the terminal device on the channel information. For example, corresponding to the two times of DFT transform described in S501, the access network device may perform two times of inverse DFT transform on the first channel information, to obtain the reconstructed channel information of the downlink channel.

According to the foregoing method provided in the present disclosure, partial information with high energy in the channel information is selected for compression and feedback, so that CSI feedback overheads can be reduced, and performance of the communication system can be improved.

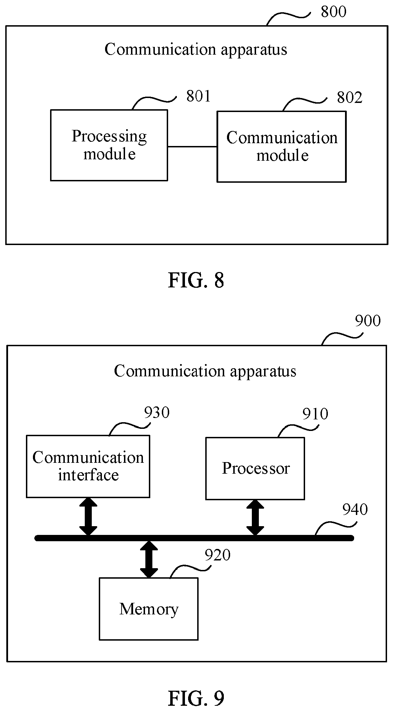

Based on the same concept, refer to FIG. 8. The present disclosure provides a communication apparatus 800. The communication apparatus 800 includes a processing module 801 and a communication module 802. The communication apparatus 800 may be a terminal device, or may be a communication apparatus that is used in a terminal device or used together with a terminal device and that can implement a communication method performed on the terminal device side. Alternatively, the communication apparatus 800 may be an access network device, or may be a communication apparatus that is used in an access network device or used together with an access network device and can implement a communication method performed on the access network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device side or the access network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 800 is used in the terminal device, the processing module 801 may be configured to implement a processing function of the terminal device in the example in FIG. 5, and the communication module 802 may be configured to implement receiving and sending functions of the terminal device in the example in FIG. 5. Alternatively, the communication apparatus may be understood with reference to the third aspect and the possible designs in the third aspect in the summary.

When the communication apparatus 800 is used in the access network device, the processing module 801 may be configured to implement a processing function of the access network device in the example in FIG. 5, and the communication module 802 may be configured to implement receiving and sending functions of the access network device in the example in FIG. 5. Alternatively, the communication apparatus may be understood with reference to the fourth aspect and the possible designs in the fourth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in the present disclosure is an example, and is merely division into logical functions. There may be another division manner during actual implementation. In addition, functional modules in examples of the present disclosure may be integrated into one processor, or each of the modules may exist alone physically, or two or more modules may be integrated into one module. The integrated module may be implemented in a form of hardware, or may be implemented in a form of a software functional module.

Based on the same technical concept, the present disclosure further provides a communication apparatus 900. For example, the communication apparatus 900 may be a chip or a chip system. Optionally, in the present disclosure, the chip system may include a chip, or may include a chip and another discrete component.

The communication apparatus 900 may be configured to implement a function of any network element in the communication system described in the foregoing example. The communication apparatus 900 may include at least one processor 910. The processor 910 is coupled to a memory. Optionally, the memory may be located in the apparatus, the memory may be integrated with the processor, or the memory may be located outside the apparatus. For example, the communication apparatus 900 may further include at least one memory 920. The memory 920 stores a computer program, a computer program or instructions, and/or data necessary for implementing any one of the foregoing examples. The processor 910 may execute the computer program stored in the memory 920, to complete the method in any one of the foregoing examples.

The communication apparatus 900 may further include a communication interface 930, and the communication apparatus 900 may exchange information with another device through the communication interface 930. For example, the communication interface 930 may be a transceiver, a circuit, a bus, a module, a pin, or a communication interface of another type. When the communication apparatus 900 is a chip-type apparatus or circuit, the communication interface 930 in the apparatus 900 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

Couplings in the present disclosure are indirect couplings or communication connections between apparatuses, units, or modules, may be electrical, mechanical, or in another form, and are used for information exchange between the apparatuses, the units, or the modules. The processor 910 may operate in collaboration with the memory 920 and the communication interface 930. A specific medium connecting the processor 910, the memory 920, and the communication interface 930 is not limited in the present disclosure.

Optionally, refer to FIG. 9. The processor 910, the memory 920, and the communication interface 930 are connected to each other through a bus 940. The bus 940 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not indicate that there is only one bus or only one type of bus.

In the present disclosure, the processor may be a general-purpose processor, a digital signal processor, an application-specific integrated circuit, a field programmable gate array or another programmable logic device, a discrete gate or a transistor logic device, or a discrete hardware component, and can implement or perform methods, steps, and logical block diagrams that are disclosed in the present disclosure. The general-purpose processor may be a microprocessor, any conventional processor, or the like. The steps of the methods disclosed with reference to the present disclosure may be directly implemented by a hardware processor, or may be implemented by a combination of hardware and a software module in a processor.

In the present disclosure, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in the present disclosure may alternatively be a circuit or any other apparatus that can implement a storage function, and is configured to store program instructions and/or data.

In a possible implementation, the communication apparatus 900 may be used in an access network device. Specifically, the communication apparatus 900 may be an access network device, or may be an apparatus that can support an access network device in implementing functions of the access network device in any one of the foregoing examples. The memory 920 stores a computer program (or instructions) and/or data for implementing the functions of the access network device in any one of the foregoing examples. The processor 910 may execute the computer program stored in the memory 920, to complete the method performed by the access network device in any one of the foregoing examples. When the communication apparatus 900 is used in the access network device, the communication interface in the communication apparatus 900 may be configured to interact with a terminal device, and send information to the terminal device or receive information from the terminal device.

In another possible implementation, the communication apparatus 900 may be used in a terminal device. Specifically, the communication apparatus 900 may be a terminal device, or may be an apparatus that can support a terminal device in implementing functions of the terminal device in any one of the foregoing examples. The memory 920 stores a computer program (or instructions) and/or data for implementing the functions of the terminal device in any one of the foregoing examples. The processor 910 may execute the computer program stored in the memory 920, to complete the method performed by the terminal device in any one of the foregoing examples. When the communication apparatus 900 is used in the terminal device, the communication interface in the communication apparatus 900 may be configured to interact with an access network device, and send information to the access network device or receive information from the access network device.

The communication apparatus 900 provided in this example may be applied to the access network device to complete the method performed by the access network device, or may be applied to the terminal device to complete the method performed by the terminal device. Therefore, for technical effects that can be achieved by the communication apparatus 900, refer to the foregoing method embodiments. Details are not described herein again.

Based on the foregoing example, the present disclosure provides a communication system, including an access network device and a terminal device. The access network device and the terminal device can implement the communication method provided in the example shown in FIG. 5.

All or some of the technical solutions provided in the present disclosure may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, the procedures or functions according to the present disclosure are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In the present disclosure, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to the present disclosure without departing from the scope of the present disclosure. In this way, the present disclosure is intended to cover these modifications and variations of the present disclosure provided that they fall within the scope of protection defined by the claims of the present disclosure and their equivalent technologies.

**Claims**

1.  A communication method, comprising:

    determining first channel information, wherein the first channel information comprises information in M1 dimensions, information in an $i^{th}$ dimension in the M1 dimensions comprises $N_i$ pieces of information, M1 is a positive integer greater than 1, $i$ is a positive integer ranging from 1 to M1, and $N_i$ is a positive integer greater than 1;
    determining channel state indication information based on second channel information, wherein the second channel information indicates partial information of $N_m$ pieces of information in an $m^{th}$ dimension in the M1 dimensions, and $m$ is a positive integer from 1 to M1; and
    sending first indication information and the channel state indication information, wherein the first indication information indicates a location of the second channel information in the first channel information.

2.  The method according to claim 1, wherein the partial information of the $N_m$ pieces of information in the $m^{th}$ dimension comprises K pieces of information, energy of any one of the K pieces of information is greater than or equal to energy of any one of the $N_m$ pieces of information in the $m^{th}$ dimension other than the K pieces of information, and K is a positive integer greater than 1.

3.  The method according to claim 1 or 2, wherein the partial information of the $N_m$ pieces of information in the $m^{th}$ dimension comprises K pieces of information, energy of a $k^{th}$ piece of information in the K pieces of information is greater than energy of a $(k+1)^{th}$ piece of information, K is a positive integer greater than 1, and k is a positive integer ranging from 1 to K+1.

4.  The method according to claim 1 or 2, wherein the partial information of the $N_m$ pieces of information in the $m^{th}$ dimension comprises K pieces of information, a sequence of indexes of a $k^{th}$ piece of information and a $(k+1)^{th}$ piece of information in the K pieces of information is the same as a sequence of indexes of first information and second information in the first channel information, the $k^{th}$ piece of information corresponds to the first information, the $(k+1)^{th}$ piece of information corresponds to the second information, K is a positive integer greater than 1, and k is a positive integer ranging from 1 to K-1.

5.  The method according to any one of claims 1 to 4, wherein an information type of the $m^{th}$ dimension comprises delay domain information or angle domain information.

6.  The method according to any one of claims 1 to 5, wherein the information type corresponding to the $m^{th}$ dimension is the delay domain information, the partial information of the $N_m$ pieces of information in the $m^{th}$ dimension comprises a $t^{th}$ piece of information in the $N_m$ pieces of information, the first indication information indicates a location, in the first channel information, of information other than the $t^{th}$ piece of information in the second channel information, and t is a pre-configured value.

7.  The method according to any one of claims 1 to 6, wherein the partial information of the $N_m$ pieces of information in the $m^{th}$ dimension comprises K pieces of information, and the method further comprises:
    obtaining second indication information, wherein the second indication information indicates a value of K and/or a quantity of bits that are in the channel state indication information and that correspond to each of the K pieces of information, and K is a positive integer greater than 1.

8.  The method according to any one of claims 1 to 7, wherein the channel state indication information indicates encoded information of the second channel information.

9.  The method according to any one of claims 1 to 8, wherein the determining first channel information comprises:

    obtaining third channel information, wherein the third channel information comprises information in M2 dimensions, and M2 is equal to M1; and
    performing conversion processing on the third channel information in at least one dimension to determine the first channel information, wherein an information type of at least one dimension in the M2 dimensions and an information type of at least one dimension in the M1 dimensions are different.

10. The method according to any one of claims 1 to 8, wherein the determining first channel information comprises:

obtaining third channel information, wherein the third channel information comprises information in M2 dimensions, and M2 is equal to M1; and

performing conversion processing on the third channel information in at least one dimension to determine fourth channel information, wherein the first channel information is cyclic shift information of the fourth channel information, and an information type of at least one dimension in the M2 dimensions and an information type of at least one dimension in the M1 dimensions are different.

11. The method according to claim 9 or 10, wherein information types of the M2 dimensions comprise frequency domain information, and information types of the M1 dimensions comprise delay domain information corresponding to the frequency domain information; and/or the information types of the M2 dimensions comprise space domain information, and the information types of the M1 dimensions comprise angle domain information corresponding to the space domain information.

12. A communication method, comprising:

obtaining first indication information and channel state indication information, wherein the first indication information indicates a location of second channel information in first channel information, the channel state indication information is determined based on the second channel information, the first channel information comprises information in M1 dimensions, information in an $i^{th}$ dimension in the M1 dimensions comprises $N_i$ pieces of information, the second channel information indicates partial information of $N_m$ pieces of information in an $m^{th}$ dimension in the M1 dimensions, M1 is a positive integer greater than 1, $i$ is a positive integer ranging from 1 to M1, $N_i$ is a positive integer greater than 1, and $m$ is a positive integer from 1 to M1; and

restoring the first channel information based on the first indication information and the channel state indication information.

13. The method according to claim 12, wherein the partial information of the $N_m$ pieces of information in the $m^{th}$ dimension comprises K pieces of information, energy of any one of the K pieces of information is greater than or equal to energy of any one of the $N_m$ pieces of information in the $m^{th}$ dimension other than the K pieces of information, and K is a positive integer greater than 1.

14. The method according to claim 12 or 13, wherein the partial information of the $N_m$ pieces of information in the $m^{th}$ dimension comprises K pieces of information, energy of a $k^{th}$ piece of information in the K pieces of information is greater than energy of a $(k+1)^{th}$ piece of information, K is a positive integer greater than 1, and k is a positive integer ranging from 1 to K-1.

15. The method according to claim 12 or 13, wherein the partial information of the $N_m$ pieces of information in the $m^{th}$ dimension comprises K pieces of information, a sequence of indexes of a $k^{th}$ piece of information and a $(k+1)^{th}$ piece of information in the K pieces of information is the same as a sequence of indexes of first information and second information in the first channel information, the $k^{th}$ piece of information corresponds to the first information, the $(k+1)^{th}$ piece of information corresponds to the second information, K is a positive integer greater than 1, and k is a positive integer ranging from 1 to K-1.

16. The method according to any one of claims 12 to 15, wherein an information type of the $m^{th}$ dimension comprises delay domain information or angle domain information.

17. The method according to any one of claims 12 to 16, wherein the information type corresponding to the $m^{th}$ dimension is the delay domain information, the partial information of the $N_m$ pieces of information in the $m^{th}$ dimension comprises a $t^{th}$ piece of information in the $N_m$ pieces of information, the first indication information indicates a location, in the first channel information, of information other than the $t^{th}$ piece of information in the second channel information, and t is a pre-configured value.

18. The method according to any one of claims 12 to 17, wherein the partial information of the $N_m$ pieces of information in the $m^{th}$ dimension comprises K pieces of information, and the method further comprises:
sending second indication information, wherein the second indication information indicates a value of K and/or a quantity of bits that are in the channel state indication information and that correspond to each of the K pieces of information, and K is a positive integer greater than 1.

19. A communication apparatus, comprising:

a processing module, configured to determine first channel information, wherein the first channel information comprises information in M1 dimensions, information in an $i^{th}$ dimension in the M1 dimensions comprises $N_i$ pieces of information, M1 is a positive integer greater than 1, $i$ is a positive integer ranging from 1 to M1, and $N_i$ is a positive integer greater than 1; and

the processing module is configured to determine channel state indication information based on second channel information, wherein the second channel information indicates partial information of $N_m$ pieces of information in an $m^{th}$ dimension in the M1 dimensions, and m is a positive integer from 1 to M1; and

send first indication information and the channel state indication information, wherein the first indication information indicates a location of the second channel information in the first channel information.

20. The apparatus according to claim 19, wherein the partial information of the $N_m$ pieces of information in the $m^{th}$ dimension comprises K pieces of information, energy of any one of the K pieces of information is greater than or equal to energy of any one of the $N_m$ pieces of information in the $m^{th}$ dimension other than the K pieces of information, and K is a positive integer greater than 1.

21. The apparatus according to claim 19 or 20, wherein the partial information of the $N_m$ pieces of information in the $m^{th}$ dimension comprises K pieces of information, energy of a $k^{th}$ piece of information in the K pieces of information is greater than energy of a $(k+1)^{th}$ piece of information, K is a positive integer greater than 1, and k is a positive integer ranging from 1 to K-1.

22. The apparatus according to claim 19 or 20, wherein the partial information of the $N_m$ pieces of information in the $m^{th}$ dimension comprises K pieces of information, a sequence of indexes of a $k^{th}$ piece of information and a $(k+1)^{th}$ piece of information in the K pieces of information is the same as a sequence of indexes of first information and second information in the first channel information, the $k^{th}$ piece of information corresponds to the first information, the $(k+1)^{th}$ piece of information corresponds to the second information, K is a positive integer greater than 1, and k is a positive integer ranging from 1 to K+1.

23. The apparatus according to any one of claims 19 to 22, wherein an information type of the $m^{th}$ dimension comprises delay domain information or angle domain information.

24. The apparatus according to any one of claims 19 to 23, wherein the information type corresponding to the $m^{th}$ dimension is the delay domain information, the partial information of the $N_m$ pieces of information in the $m^{th}$ dimension comprises a $t^{th}$ piece of information in the $N_m$ pieces of information, the first indication information indicates a location, in the first channel information, of information other than the $t^{th}$ piece of information in the second channel information, and t is a pre-configured value.

25. The apparatus according to any one of claims 19 to 24, wherein the partial information of the $N_m$ pieces of information in the $m^{th}$ dimension comprises K pieces of information; and

the communication module is further configured to obtain second indication information, wherein the second indication information indicates a value of K and/or a quantity of bits that are in the channel state indication information and that correspond to each of the K pieces of information, and K is a positive integer greater than 1.

26. The apparatus according to any one of claims 19 to 25, wherein the channel state indication information indicates encoded information of the second channel information.

27. The apparatus according to any one of claims 19 to 26, wherein

the communication module is further configured to obtain third channel information, wherein the third channel information comprises information in M2 dimensions, and M2 is equal to M1; and

the processing module is further configured to perform conversion processing on the third channel information in at least one dimension to determine the first channel information, wherein an information type of at least one dimension in the M2 dimensions and an information type of at least one dimension in the M1 dimensions are different.

28. The apparatus according to any one of claims 19 to 26, wherein

the communication module is further configured to obtain third channel information, wherein the third channel information comprises information in M2 dimensions, and M2 is equal to M1; and

the processing module is further configured to perform conversion processing on the third channel information in at least one dimension to determine fourth channel information, wherein the first channel information is cyclic shift information of the fourth channel information, and an information type of at least one dimension in the M2 dimensions and an information type of at least one dimension in the M1 dimensions are different.

29. The apparatus according to claim 27 or 28, wherein information types of the M2 dimensions comprise frequency domain information, and information types of the M1 dimensions comprise delay domain information corresponding to the frequency domain information; and/or the information types of the M2 dimensions comprise space domain information, and the information types of the M1 dimensions comprise angle domain information corresponding to the space domain information.

30. A communication apparatus, comprising:

a communication module, configured to obtain first indication information and channel state indication information, wherein the first indication information indicates a location of second channel information in first channel information, the channel state indication information is determined based on the second channel information, the first channel information comprises information in M1 dimensions, information in an $i^{th}$ dimension in the M1 dimensions comprises $N_i$ pieces of information, the second channel information indicates partial information of $N_m$ pieces of information in an $m^{th}$ dimension in the M1 dimensions, M1 is a positive integer greater than 1, $i$ is a positive integer ranging from 1 to M1, $N_i$ is a positive integer greater than 1, and $m$ is a positive integer from 1 to M1; and

a processing module, configured to restore the first channel information based on the first indication information and the channel state indication information.

31. The apparatus according to claim 30, wherein the partial information of the $N_m$ pieces of information in the $m^{th}$ dimension comprises K pieces of information, energy of any one of the K pieces of information is greater than or equal to energy of any one of the $N_m$ pieces of information in the $m^{th}$ dimension other than the K pieces of information, and K is a positive integer greater than 1.

32. The apparatus according to claim 30 or 31, wherein the partial information of the $N_m$ pieces of information in the $m^{th}$ dimension comprises K pieces of information, energy of a $k^{th}$ piece of information in the K pieces of information is greater than energy of a $(k+1)^{th}$ piece of information, K is a positive integer greater than 1, and k is a positive integer ranging from 1 to K-1.

33. The apparatus according to claim 30 or 31, wherein the partial information of the $N_m$ pieces of information in the $m^{th}$ dimension comprises K pieces of information, a sequence of indexes of a $k^{th}$ piece of information and a $(k+1)^{th}$ piece of information in the K pieces of information is the same as a sequence of indexes of first information and second information in the first channel information, the $k^{th}$ piece of information corresponds to the first information, the $(k+1)^{th}$ piece of information corresponds to the second information, K is a positive integer greater than 1, and k is a positive integer ranging from 1 to K-1.

34. The apparatus according to any one of claims 30 to 33, wherein an information type of the $m^{th}$ dimension comprises delay domain information or angle domain information.

35. The apparatus according to any one of claims 30 to 34, wherein the information type corresponding to the $m^{th}$ dimension is the delay domain information, the partial information of the $N_m$ pieces of information in the $m^{th}$ dimension comprises a $t^{th}$ piece of information in the $N_m$ pieces of information, the first indication information indicates a location, in the first channel information, of information other than the $t^{th}$ piece of information in the second channel information, and t is a pre-configured value.

36. The apparatus according to any one of claims 30 to 35, wherein the partial information of the $N_m$ pieces of information in the $m^{th}$ dimension comprises K pieces of information, and the communication module is further configured to send second indication information, wherein the second indication information indicates a value of K and/or a quantity of bits that are in the channel state indication information and that correspond to each of the K pieces of information, and K is a positive integer greater than 1.

37. A communication apparatus, comprising:
a processor, wherein the processor is coupled to a memory, and the processor is configured to invoke computer program instructions stored in the memory, to perform the method according to any one of claims 1 to 11.

**38.** A communication apparatus, comprising:
a processor, wherein the processor is coupled to a memory, and the processor is configured to invoke computer program instructions stored in the memory, to perform the method according to any one of claims 12 to 18.

**39.** A communication system, comprising the communication apparatus according to any one of claims 19 to 29 or claim 37, and the communication apparatus according to any one of claims 30 to 36 or claim 38.

**40.** A computer-readable storage medium, wherein the computer-readable storage medium stores instructions, and when the instructions are run on a computer, the computer is enabled to perform the method according to any one of claims 1 to 11 or the method according to any one of claims 12 to 18.

**41.** A computer program product, comprising instructions, wherein when the instructions are run on a computer, the computer is enabled to perform the method according to any one of claims 1 to 11 or the method according to any one of claims 12 to 18.

FIG. 1

FIG. 2

$$y = f\left(\sum_{i=0}^{n} w_i x_i + b\right)$$

FIG. 3A

FIG. 3B

FIG. 3C

FIG. 4A

FIG. 4B

FIG. 4C

FIG. 4D

```
┌─────────────────┐                          ┌─────────────────┐
│ Terminal device │                          │ Access network  │
│                 │                          │     device      │
└─────────────────┘                          └─────────────────┘
```

┌───────────────────────────────┐
│ S501: Determine first channel │
│         information           │
└───────────────────────────────┘

┌─────────────────────────────────────────┐
│ S502: Determine channel state indication │
│ information based on partial information  │
│ (second channel information) of the first │
│           channel information             │
└─────────────────────────────────────────┘

S503: First indication information and
channel state indication information

┌───────────────────────────────────┐
│ S504: Restore the first channel    │
│ information based on the first      │
│ indication information and the      │
│ channel state indication information│
└───────────────────────────────────┘

FIG. 5

First channel                Second channel
information                  information

$N\_tx'$

... 

2   4   6                    1   2   3

$N\_sb'$                     K=3

FIG. 6A

First channel
information

Second channel
information

$N\_tx'$

... 

2   4   6

$N\_sb'$

1   2   3

K=3

FIG. 6B

Terminal device

Access network device

First channel information → Second channel information (K) → Location quantization → First indication information → Inverse location quantization → Location of the second channel information →

Second channel information (K) → Encoder → Channel state indication information → Decoder → Restore the second channel information → Restore the first channel information

FIG. 7A

Terminal device

Access network device

First channel information → Second channel information (K) → Location quantization

First indication information → Inverse location quantization → Location of the second channel information

Second channel information (K) → Encoder → Quantizer

Channel state indication information → Inverse quantizer → Decoder

Restore the second channel information

Restore the first channel information

FIG. 7B

EP 4 478 619 A1

800

Communication apparatus

801

Processing
module

802

Communication
module

**FIG. 8**

900

Communication apparatus

930

Communication
interface

910

Processor

940

920

Memory

**FIG. 9**

## INTERNATIONAL SEARCH REPORT

International application No.

**PCT/CN2023/080116**

### A. CLASSIFICATION OF SUBJECT MATTER

H04B7/0417(2017.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, CNKI, VEN, ENTXTC: 减少, 减小, 降低, 开销, 角度域, 空间域, 空域, 能量, 排列, 排序, 频率域, 频域, 时延域, 维度, 位置, 信道状态信息, 压缩, 指示, CSI, reduce, indicate, overhead, spatial domain, frequency domain

### C. DOCUMENTS CONSIDERED TO BE RELEVANT

| Category* | Citation of document, with indication, where appropriate, of the relevant passages | Relevant to claim No. |
|---|---|---|
| X | CN 112583501 A (HUAWEI TECHNOLOGIES CO., LTD.) 30 March 2021 (2021-03-30) description, paragraphs [0005]-[0117] and [0503]-[0527] | 1, 5, 8, 12, 16, 19, 23, 26, 30, 34, 37-41 |
| A | CN 108282321 A (HUAWEI TECHNOLOGIES CO., LTD.) 13 July 2018 (2018-07-13) entire document | 1-41 |
| A | CN 112751592 A (HUAWEI TECHNOLOGIES CO., LTD.) 04 May 2021 (2021-05-04) entire document | 1-41 |
| A | CN 113169773 A (QUALCOMM INC.) 23 July 2021 (2021-07-23) entire document | 1-41 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **22 May 2023** | **11 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/080116**

| Patent document cited in search report | | | Publication date (day/month/year) | Patent family member(s) | | | Publication date (day/month/year) |
|---|---|---|---|---|---|---|---|
| CN | 112583501 | A | 30 March 2021 | None | | | |
| CN | 108282321 | A | 13 July 2018 | US | 2019335474 | A1 | 31 October 2019 |
| | | | | US | 11147076 | B2 | 12 October 2021 |
| CN | 112751592 | A | 04 May 2021 | None | | | |
| CN | 113169773 | A | 23 July 2021 | WO | 2020113572 | A1 | 11 June 2020 |
| | | | | US | 2022006500 | A1 | 06 January 2022 |
| | | | | EP | 3892015 | A1 | 13 October 2021 |
| | | | | EP | 3892015 | A4 | 31 August 2022 |
| | | | | WO | 2020114476 | A1 | 11 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210248158